(19) Europäisches Patentamt
European Patent Office
Office européen des brevets

(11) **EP 4 568 382 A1**

(12) **EUROPEAN PATENT APPLICATION**
published in accordance with Art. 153(4) EPC

(43) Date of publication:
**11.06.2025 Bulletin 2025/24**

(21) Application number: **23849363.9**

(22) Date of filing: **31.07.2023**

(51) International Patent Classification (IPC):
*H04W 72/04* $^{(2023.01)}$

(52) Cooperative Patent Classification (CPC):
**H04W 72/04; H04W 72/0453; H04W 72/232**

(86) International application number:
**PCT/CN2023/110303**

(87) International publication number:
**WO 2024/027656 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.08.2022 CN 202210929395**
**17.02.2023 CN 202310153183**

(71) Applicant: **Datang Mobile Communications Equipment Co., Ltd.**
**Beijing 100085 (CN)**

(72) Inventors:
• **ZHU, Min**
**Beijing 100085 (CN)**
• **WANG, Junwei**
**Beijing 100085 (CN)**

(74) Representative: **Studio Torta S.p.A.**
**Via Viotti, 9**
**10121 Torino (IT)**

(54) **METHOD FOR DETERMINING FREQUENCY-DOMAIN POSITION OF PDCCH CANDIDATE, AND TERMINAL**

(57) The present application discloses a method for determining a frequency-domain position of a PDCCH candidate, which are used to propose a method for determining a starting CCE position of a PDCCH candidate corresponding to multiple scheduled carriers under multi-carrier scheduling. The method includes: determining an offset corresponding to a first carrier group, where the first carrier group includes at least one carrier, and the first carrier group is configured for multi-carrier scheduling; determining a starting control channel element CCE position of a physical downlink control channel PDCCH candidate corresponding to the first carrier group according to the offset corresponding to the first carrier group.

600

Determining an offset corresponding to a first carrier group, where the first carrier group includes at least one carrier, and the first carrier group is configured for multi-carrier scheduling

601

Determining a starting control channel element CCE position of a physical downlink control channel PDCCH candidate corresponding to the first carrier group according to the offset corresponding to the first carrier group

FIG. 6

**Description**

**CROSS-REFERENCE TO RELATED APPLICATIONS**

The present application claims priority of Chinese Patent Application No. 202210929395.8, which was filed with China National Intellectual Property Administration on August 3, 2022 and titled "Method for Determining Frequency-Domain Position of PDCCH Candidate, and Terminal", the entire contents of which are incorporated herein by reference; the present application claims priority of Chinese Patent Application No. 202310153183.X, which was filed with China National Intellectual Property Administration on February 17, 2023 and titled "Method for Determining Frequency-Domain Position of PDCCH Candidate, and Terminal", the entire contents of which are incorporated herein by reference.

**TECHNICAL FIELD**

The present application relates to the field of wireless communication technologies, and in particular, to a method for determining a frequency-domain position of a PDCCH candidate, and a terminal.

**BACKGROUND**

Currently, two scheduling modes are supported: self-carrier scheduling (self-carrier scheduling) and cross-carrier scheduling (cross-carrier scheduling). Among them, in the self-carrier scheduling, a control signaling and scheduled data information are on a same carrier; in the cross-carrier scheduling, the control signaling and the scheduled data information are on different carriers.

Multi-carrier scheduling (multi-carrier scheduling) refers to scheduling data information on multiple carriers through a control signaling. For the multi-carrier scheduling, only a starting CCE (Control Channel Element, control channel element) position corresponding to a PDCCH (Physical Downlink Control Channel, physical downlink control channel) candidate (candidate) of one scheduled carrier can be determined, and the starting CCE position corresponding to the PDCCH candidate of multiple scheduled carriers cannot be determined.

**SUMMARY**

This present application provides a method for determining a frequency-domain position of a PDCCH candidate, and a terminal, which are used to propose a method for determining a starting CCE position of a PDCCH candidate corresponding to multiple scheduled carriers under multi-carrier scheduling.

In a first aspect, an embodiment of the present disclosure provides a method for determining a frequency-domain position of a PDCCH candidate, which includes:

determining an offset corresponding to a first carrier group, where the first carrier group includes at least one carrier, and the first carrier group is configured for multi-carrier scheduling;
determining a starting control channel element CCE position of a physical downlink control channel PDCCH candidate corresponding to the first carrier group according to the offset corresponding to the first carrier group.

In the embodiment of the present application, the terminal can determine the starting CCE position of the PDCCH candidate of multi-carrier scheduling according to the offset and monitor it, so that the terminal can detect a multi-carrier scheduling DCI and then determine the scheduled carrier.

As an optional implementation, the offset includes a first offset;
the determining the offset corresponding to the first carrier group, includes:

receiving a first radio resource control RRC signaling sent by a network side device, where the first RRC signaling carries a first configuration parameter, and the first configuration parameter is related to multi-carrier scheduling;
determining the first offset corresponding to the first carrier group according to the first configuration parameter.

As an optional implementation, if the number of the first carrier groups is greater than 1, the first carrier groups and the offset satisfy that the offsets corresponding to different first carrier groups are the same, and/or, different.

As an optional implementation, the offsets corresponding to different first carrier groups are the same, and/or, different, including one or more of the following:

the offsets corresponding to different first carrier groups with a same designated cell identifier are the same, and/or the offsets corresponding to different first carrier groups with different designated cell identifiers are different, where the designated cell identifier is one cell identifier in a cell identifier set corresponding to one first carrier group, and the cell identifier set includes cell identifiers corresponding to respective scheduled carriers in the first carrier group;

each first carrier group corresponds to one unique offset;

all the first carrier groups correspond to one offset. All the first carrier groups are all first carrier groups in a same cell group.

As an optional implementation, the designated cell identifier is a minimum value of the cell identifiers in the cell identifier set; or a maximum value of the cell identifiers in the cell identifier set.

As an optional implementation, the offset includes a second offset, where at least one carrier included in the first carrier group is configured for cross-carrier scheduling;

the determining the offset corresponding to the first carrier group, includes:

receiving a second RRC signaling sent by a network side device, where the second RRC signaling includes a second configuration parameter, and the second configuration parameter is related to cross-carrier scheduling;

determining the second offset corresponding to the first carrier group according to the second configuration parameter.

As an optional implementation, the second offset is a maximum value of cross-carrier scheduling indication indexes, where the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;

or, the second offset is a preset value greater than or equal to zero.

As an optional implementation, the offset includes a first offset and a second offset, where at least one carrier included in the first carrier group is configured for cross-carrier scheduling;

the determining the offset corresponding to the first carrier group, includes:

determining that the first offset corresponding to the first carrier group is zero;

determining the second offset corresponding to the first carrier group according to a cross-carrier scheduling indication index value corresponding to a first carrier in the first carrier group; where the first carrier satisfies that:

it is a carrier configured for multi-carrier scheduling and cross-carrier scheduling; or

a cell identifier corresponding to the first carrier is a minimum cell identifier among cell identifiers corresponding to carriers configured for cross-carrier scheduling in the first carrier group; or

a cell identifier corresponding to the first carrier is a maximum cell identifier among cell identifiers corresponding to carriers configured for cross-carrier scheduling in the first carrier group.

As an optional implementation, the offset includes a first offset and a second offset, where none of carriers included in the first carrier group are configured for cross-carrier scheduling;

the determining the offset corresponding to the first carrier group includes:

determining the first offset corresponding to the first carrier group according to a first configuration parameter in a received first RRC signaling;

determining the second offset corresponding to the first carrier group is zero.

As an optional implementation, the determining the starting CCE position of the PDCCH candidate corresponding to the first carrier group according to the offset corresponding to the first carrier group, includes:

determining the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; where all aggregation levels include aggregation levels in the search space corresponding to scheduled carriers of the first carrier group and/or an aggregation level in the search space corresponding to a single scheduled carrier.

As an optional implementation, determining the starting CCE position of the PDCCH candidate corresponding to the first carrier group by the following formula:

$$S = L \times \left\{ \left( Y_{p,n_{s,f}^{\mu}} + \left\lceil \frac{m_{s,m\_n_{CI}} \cdot N_{CCE,p}}{L \cdot M_{s,max}^{(L)}} \right\rceil + n_{CI} + X \right) \mod \lfloor N_{CCE,p}/L \rfloor \right\} + i$$

where S represents the starting CCE position of the PDCCH candidate corresponding to the first carrier group; L represents the aggregation level of the PDCCH candidate in the search space corresponding to the first carrier group; $N_{CCE,p}$ represents the number of CCEs in the physical resource set associated with the search space corresponding to the first carrier group; $m_{s,m\_n_{CI}} = \left[ 0, \ M_{s,m_{n_{CI}}}^{(L)} - 1 \right], \ M_{s,m\_n_{CI}}^{(L)}$ represents the number of the PDCCH candidates with the aggregation level of L in the search space corresponding to the first carrier group; $M_{s,max}^{(L)}$ represents the number of all the maximum PDCCH candidates with the aggregation level of L in the multi-carrier scheduling; $i = [0, L - 1]$;

$Y_{p,n_{s,f}^{\mu}}$ represents a random number; $n_{CI}$ represents the second offset and X represents the first offset.

As an optional implementation, a length of an indication field corresponding to the multi-carrier scheduling is determined according to the number of the first carrier group.

As an optional implementation, the method further includes:
determining whether the first carrier group is valid according to an activation state of at least one carrier in the first carrier group.

As an optional implementation, the determining whether the first carrier group is valid according to the activation state of at least one carrier in the first carrier group, includes:

determining the first carrier group is invalid if at least one carrier in the first carrier group is in a deactivation or sleep mode; or
determining that the first carrier group is valid and data is not sent or received on the carrier in the deactivation or sleep mode if at least one carrier in the first carrier group is in the deactivation or sleep mode.

In a second aspect, an embodiment of the present application provides a terminal, which includes at least one processor and a memory connected with the at least one processor, where the memory is configured to store a program executed by the at least one processor, and the at least one processor is configured to read the program in the memory and execute the following steps:

determining an offset corresponding to a first carrier group, where the first carrier group includes at least one carrier, and the first carrier group is configured for multi-carrier scheduling;
determining a starting control channel element CCE position of a physical downlink control channel PDCCH candidate corresponding to the first carrier group according to the offset corresponding to the first carrier group.

As an optional implementation, the offset includes a first offset;
the at least one processor is specifically configured to perform:

receiving a first radio resource control RRC signaling sent by a network side device, where the first RRC signaling carries a first configuration parameter, and the first configuration parameter is related to multi-carrier scheduling;
determining the first offset corresponding to the first carrier group according to the first configuration parameter.

As an optional implementation, if the number of the first carrier groups is greater than 1, the first carrier groups and the offset satisfy that the offsets corresponding to different first carrier groups are the same, and/or, different.

As an optional implementation, the offsets corresponding to different first carrier groups are the same, and/or, different, including one or more of the following:

the offsets corresponding to different first carrier groups with a same designated cell identifier are the same, and/or the offsets corresponding to different first carrier groups with different designated cell identifiers are different, where the designated cell identifier is one cell identifier in a cell identifier set corresponding to one first carrier group, and the cell identifier set includes cell identifiers corresponding to respective scheduled carriers in the first carrier group;
each first carrier group corresponds to one unique offset;
all the first carrier groups correspond to one offset; all the first carrier groups are all first carrier groups in a same cell group.

As an optional implementation, the designated cell identifier is a minimum value of the cell identifiers in the cell identifier set; or a maximum value of the cell identifiers in the cell identifier set.

As an optional implementation, the offset includes a second offset, where at least one carrier included in the first carrier group is configured for cross-carrier scheduling;
the at least one processor is specifically configured to perform:

receive a second RRC signaling sent by a network side device, where the second RRC signaling includes a second configuration parameter, and the second configuration parameter is related to cross-carrier scheduling;
determine the second offset corresponding to the first carrier group according to the second configuration parameter.

As an alternative embodiment, the second offset is a maximum value of cross-carrier scheduling indication indexes, where the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;
or, the second offset is a preset value greater than or equal to zero.

As an optional implementation, the offset includes a first offset and a second offset, where at least one carrier included in the first carrier group is configured for cross-carrier scheduling;
the at least one processor is specifically configured to perform:

determining that the first offset corresponding to the first carrier group is zero;
determining the second offset corresponding to the first carrier group according to a cross-carrier scheduling indication index value corresponding to a first carrier in the first carrier group; where the first carrier satisfies that:

it is a carrier configured for multi-carrier scheduling and cross-carrier scheduling; or
a cell identifier corresponding to the first carrier is a minimum cell identifier among cell identifiers corresponding to carriers configured for cross-carrier scheduling in the first carrier group; or
a cell identifier corresponding to the first carrier is a maximum cell identifier among cell identifiers corresponding to carriers configured for cross-carrier scheduling in the first carrier group.

As an optional implementation, the offset includes a first offset and a second offset, where none of carriers included in the first carrier group are configured for cross-carrier scheduling;
the at least one processor is specifically configured to perform:

determining the first offset corresponding to the first carrier group according to a first configuration parameter in a received first RRC signaling;
determining the second offset corresponding to the first carrier group is zero.

As an optional implementation, the at least one processor is specifically configured to perform:
determining the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; where all aggregation levels include aggregation levels in the search space corresponding to scheduled carriers of the first carrier group and/or an aggregation level in the search space corresponding to a single scheduled carrier.

As an optional implementation, the at least one processor is specifically configured to determine the starting CCE position of the PDCCH candidate corresponding to the first carrier group by the following formula:

$$S = L \times \left\{ \left( Y_{p,n_{s,f}^{\mu}} + \left\lfloor \frac{m_{s,m\_n_{CI}} \cdot N_{CCE,p}}{L \cdot M_{s,max}^{(L)}} \right\rfloor + n_{CI} + X \right) \bmod \left\lfloor N_{CCE,p}/L \right\rfloor \right\} + i$$

where S represents the starting CCE position of the PDCCH candidate corresponding to the first carrier group; L represents the aggregation level of the PDCCH candidate in the search space corresponding to the first carrier group;

$N_{CCE,p}$ represents the number of CCEs in the physical resource set associated with the search space corresponding to the first carrier group; $m_{s,m\_n_{CI}} = \left[ 0, \ M^{(L)}_{s,m_{n_{CI}}} - 1 \right]$, $M^{(L)}_{s,m\_n_{CI}}$ represents the number of the PDCCH candidates with the aggregation level of L in the search space corresponding to the first carrier group; $M^{(L)}_{s,max}$ represents the number of all the maximum PDCCH candidates with the aggregation level of L in the multi-carrier scheduling; $i = [0, L - 1]$;

$Y_{p,n^{\mu}_{s,f}}$ represents a random number; $n_{CI}$ represents the second offset and X represents the first offset.

As an optional implementation, a length of an indication field corresponding to the multi-carrier scheduling is determined according to the number of the first carrier group.

As an optional implementation, the at least one processor is further specifically configured to perform: determining whether the first carrier group is valid according to an activation state of at least one carrier in the first carrier group.

As an optional implementation, the at least one processor is specifically configured to perform:

determining the first carrier group is invalid if at least one carrier in the first carrier group is in a deactivation or sleep mode; or
determining that the first carrier group is valid and data is not sent or received on the carrier in the deactivation or sleep mode if at least one carrier in the first carrier group is in the deactivation or sleep mode.

In a third aspect, an embodiment of the present disclosure provides an apparatus for determining a frequency-domain position of a PDCCH candidate, which includes:

an offset determination unit, configured to determine an offset corresponding to a first carrier group, where the first carrier group includes at least one carrier, and the first carrier group is configured for multi-carrier scheduling;
a position determination unit, configured to determine a starting control channel element CCE position of a physical downlink control channel PDCCH candidate corresponding to the first carrier group according to the offset corresponding to the first carrier group.

As an optional implementation, the offset includes a first offset;
the offset determination unit is specifically configured to:

receive a first radio resource control RRC signaling sent by a network side device, where the first RRC signaling carries a first configuration parameter, and the first configuration parameter is related to multi-carrier scheduling;
determine the first offset corresponding to the first carrier group according to the first configuration parameter.

As an optional implementation, if the number of the first carrier groups is greater than 1, the first carrier groups and the offset satisfy that the offsets corresponding to different first carrier groups are the same, and/or, different.

As an optional implementation, the offsets corresponding to different first carrier groups are the same, and/or, different, including one or more of the following:

the offsets corresponding to different first carrier groups with a same designated cell identifier are the same, and/or the offsets corresponding to different first carrier groups with different designated cell identifiers are different, where the designated cell identifier is one cell identifier in a cell identifier set corresponding to one first carrier group, and the cell identifier set includes cell identifiers corresponding to respective scheduled carriers in the first carrier group;
each first carrier group corresponds to one unique offset;
all the first carrier groups correspond to one offset; all the first carrier groups are all first carrier groups in a same cell group.

As an optional implementation, the designated cell identifier is a minimum value of the cell identifiers in the cell identifier set; or a maximum value of the cell identifiers in the cell identifier set.

As an optional implementation, the offset includes a second offset, where at least one carrier included in the first carrier group is configured for cross-carrier scheduling;
the position determination unit is specifically configured to:

receive a second RRC signaling sent by a network side device, where the second RRC signaling includes a second configuration parameter, and the second configuration parameter is related to cross-carrier scheduling;
determine the second offset corresponding to the first carrier group according to the second configuration parameter.

As an alternative embodiment, the second offset is a maximum value of cross-carrier scheduling indication indexes, where the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;
or, the second offset is a preset value greater than or equal to zero.

As an optional implementation, the offset includes a first offset and a second offset, where at least one carrier included in the first carrier group is configured for cross-carrier scheduling;
the offset determination unit is specifically configured to:

determine that the first offset corresponding to the first carrier group is zero;
determine the second offset corresponding to the first carrier group according to a cross-carrier scheduling indication index value corresponding to a first carrier in the first carrier group; where the first carrier satisfies that:

it is a carrier configured for multi-carrier scheduling and cross-carrier scheduling; or
a cell identifier corresponding to the first carrier is a minimum cell identifier among cell identifiers corresponding to carriers configured for cross-carrier scheduling in the first carrier group; or
a cell identifier corresponding to the first carrier is a maximum cell identifier among cell identifiers corresponding to carriers configured for cross-carrier scheduling in the first carrier group.

As an optional implementation, the offsets include a first offset and a second offset, where none of carriers included in the first carrier group are configured for cross-carrier scheduling;
the offset determination unit is specifically configured to:

determine the first offset corresponding to the first carrier group according to a first configuration parameter in a received first RRC signaling;
determine the second offset corresponding to the first carrier group is zero.

As an optional implementation, the position determination unit is specifically configured to:
determine the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; where all aggregation levels include aggregation levels in the search space corresponding to scheduled carriers of the first carrier group and/or an aggregation level in the search space corresponding to a single scheduled carrier.

As an optional implementation, the position determination unit is specifically configured to determine the starting CCE position of the PDCCH candidate corresponding to the first carrier group by the following formula:

$$S = L \times \left\{ \left( Y_{p,n_{s,f}^{\mu}} + \left\lceil \frac{m_{s,m\_n_{CI}} \cdot N_{CCE,p}}{L \cdot M_{s,\max}^{(L)}} \right\rceil + n_{CI} + X \right) \bmod \left\lfloor N_{CCE,p}/L \right\rfloor \right\} + i$$

where S represents the starting CCE position of the PDCCH candidate corresponding to the first carrier group; L represents the aggregation level of the PDCCH candidate in a search space corresponding to the first carrier group; $N_{CCE,p}$ represents the number of CCEs in the physical resource set associated with the search space corresponding to the first carrier group; $m_{s,m\_n_{CI}} = \left[ 0, \ M_{s,m_{n_{CI}}}^{(L)} - 1 \right]$, $M_{s,m\_n_{CI}}^{(L)}$ represents the number of the PDCCH candidates with the aggregation level of L in the search space corresponding to the first carrier group; $M_{s,\max}^{(L)}$ represents the number of all the maximum PDCCH candidates with the aggregation level of L in the multi-carrier scheduling; i = [0, L - 1];

$Y_{p,n_{s,f}^{\mu}}$ represents a random number; $n_{CI}$ represents the second offset and X represents the first offset.

As an optional implementation, a length of an indication field corresponding to the multi-carrier scheduling is determined according to the number of the first carrier group.

As an optional implementation, further including a judgment unit, specifically configured to:

determine whether the first carrier group is valid according to an activation state of at least one carrier in the first carrier group.

As an optional implementation, the judgment unit is specifically configured to:

determine the first carrier group is invalid if at least one carrier in the first carrier group is in a deactivation or sleep mode; or

determine that the first carrier group is valid and data is not sent or received on the carrier in the deactivation or sleep mode if at least one carrier in the first carrier group is in the deactivation or sleep mode.

In a fourth aspect, an embodiment of the present disclosure provides a computer storage medium, where the computer storage medium stores a computer program, and when executed by a processor, the program implements the steps of the method as provided in the first aspect.

These aspects or other aspects of the present application will be more concise and easy to understand in the following description of the embodiments.

## BRIEF DESCRIPTION OF DRAWINGS

In order to explain the technical solutions in the embodiments of this present application more clearly, the drawings needed in the description of the embodiments will be briefly introduced below. Apparently, the drawings in the following description are only a part of embodiments of the present disclosure. For persons of ordinary skill in the art, other drawings can be obtained according to these drawings without paying creative effort.

FIG. 1 is a schematic diagram of a self-carrier scheduling provided by an embodiment of the present application.
FIG. 2 is a schematic diagram of a cross-carrier scheduling provided by an embodiment of the present application.
FIG. 3 is a schematic diagram of a multi-carrier scheduling provided by an embodiment of the present application.
FIG. 4A is a schematic diagram of a configuration of a first search space provided by an embodiment of the present application.
FIG. 4B is a schematic diagram of the configuration of the first search space provided by an embodiment of the present disclosure.
FIG. 5A is a schematic diagram of a configuration of a second search space provided by an embodiment of the present application.
FIG. 5B is a schematic diagram of the configuration of the second search space provided by an embodiment of the present application.
FIG. 6 is an implementation flowchart of a method for determining frequency-domain position of PDCCH candidate provided by an embodiment of the present application.
FIG. 7 is a schematic diagram of a configuration of a third search space provided by an embodiment of the present application.
FIG. 8 is a schematic diagram of a configuration of a fourth search space provided by an embodiment of the present application.
FIG. 9 is a schematic diagram of a configuration of a fifth search space provided by an embodiment of the present application.
FIG. 10 is a schematic diagram of a terminal provided by an embodiment of the present application.
FIG. 11 is a schematic diagram of an apparatus for determining frequency-domain position of PDCCH candidate provided by an embodiment of the present application.

## DESCRIPTION OF EMBODIMENTS

In order to make the purpose, the technical solutions and the advantages of the present application more clearly, the present application will be further described in detail in combination with the drawings. Obviously, the described embodiments are only a part of embodiments of the present application, not the whole embodiments. Based on the embodiments in the present application, all other embodiments obtained by ordinary technicians in this field without creative work belong to the protection scope of the present application.

In embodiments of the present application, the term "and/or" describes the association relationship of the associated object, indicating that there can be three kinds of relations, for example, A and/or B can represent: there is A alone, there are both A and B, and there is B alone. The character "/" generally indicates that the associated objects are in an "or" relationship.

The embodiments of the present application provide a method for determining frequency-domain position of PDCCH candidate, which can be applied to a terminal. It should be noted that the terminal is a device with wireless communication function and can be deployed on land, including indoor or outdoor, handheld or vehicle-mounted; it can also be deployed on water (such as a ship, etc.); it can also be deployed in the air (such as an airplane, a balloon and a satellite). The terminal may be a mobile phone (mobile phone), a pad (pad), a computer with wireless transceiver function, a Virtual Reality (Virtual Reality, VR) terminal, an Augmented Reality (Augmented Reality, AR) terminal, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), etc. It can also be various forms of UE, Mobile Station (Mobile Station, MS) and the terminal device (terminal device).

The application scenario described in the embodiments of the present application is to describe the technical solutions of the embodiments of the present application more clearly, and does not constitute a limitation on the technical solutions provided by the embodiments of the present application. For persons of ordinary skill in the art, as the emergence of new application scenarios, the technical solutions provided by the embodiments of the present application is also applicable to similar technical problems. In the description of this application, unless otherwise specified, "multiple" means two or more.

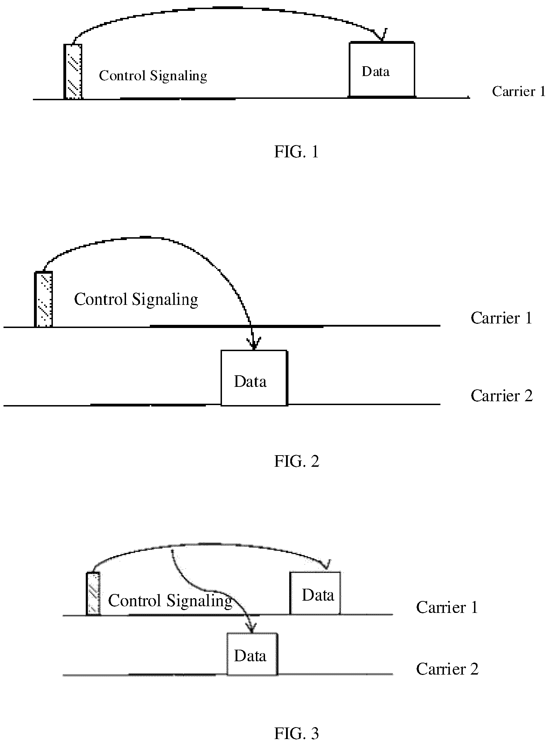

Currently, the protocol supports two scheduling modes: self-carrier scheduling (self-carrier scheduling) and cross-carrier scheduling (cross-carrier scheduling). As shown in FIG. 1, an embodiment provides a schematic diagram of a self-carrier scheduling, in which the control signaling and the scheduled data information are on the same carrier. As shown in FIG. 2, the embodiment provides a schematic diagram of a cross-carrier scheduling, in which control signaling and scheduled data information are on different carriers. Multi-carrier scheduling (multi-carrier scheduling) is to schedule data information on multiple carriers through one control signaling. As shown in FIG. 3, the embodiment also provides a schematic diagram of multi-carrier scheduling. For multi-carrier scheduling, determining only a starting CCE (Control Channel Element, control channel element) position corresponding to a PDCCH (Physical Downlink Control Channel, physical downlink control channel) candidate (candidate) of one scheduled carrier can be supported currently, and the starting CCE position corresponding to the PDCCH candidate of multiple scheduled carriers cannot be determined.

In multi-carrier scheduling, DCI (Downlink Control Information, downlink control information) format (format) 0_X/1_X is used to schedule the DCI format of PUSCH (Physical Uplink Shared Channel, physical uplink shared channel)/PDSCH (Physical Downlink Shared Channel, physical downlink shared channel) on multiple carriers, and the modes to indicate the scheduled carrier in DCI format 0_X/1_X include but are not limited to:

Mode 1: the indication field in DCI indicates a row in the high-level configuration table, where each row of the table corresponds to the combination of scheduled carriers.
Mode 2: the indication field in DCI is a bitmap (bitmap), where bitmap corresponds to the carrier scheduled by DCI 0_x/1_X.
Mode 3: using an existing field (such as CIF or FDRA) to indicate whether to schedule one carrier or multiple carriers.

The above are three modes of multi-carrier indication in DCI, which are generally described as the modes of dynamically indicating the carrier used for receiving/sending through the indication field in DCI.

In the scenario that one DCI schedules data information on two carriers, a plurality of scheduled carriers can be indicated by the CIF field in the DCI, and the plurality of scheduled carriers are a combination which is configured by a high-layer. The terminal side detects and receives one DCI scheduled for data transmission on a plurality of CCs (Component Carrier, carrier unit), and determines CC numbers scheduled by the one DCI through the following method, that is, on which CCs data transmission is performed according to the one DCI:
the terminal determines a plurality of CCs scheduled by the one DCI according to the CIF field, where the one scheduling DCI contains the CIF information field.

The CIF information field contained in the one scheduling DCI is used to indicate data transmission on N carriers including the scheduling carrier.

A combination of the N scheduled carriers is pre-configured through a high-level signaling (RRC signaling), and the CIF is used to indicate the data transmission on a group of carriers, including the scheduling carrier, scheduled by the one DCI, where the scheduling carrier refers to the carrier where the scheduling DCI is sent; or, when N=2, the CIF is used to indicate a scheduled carrier, other than the scheduling carrier, scheduled by the one DCI, that is, the one DCI indicates data transmission on the scheduling carrier and one scheduled carrier, i.e., totally two carriers. For example, when CC#0 is the scheduling carrier and a scheduled carrier number indicated by CIF is CC#5, then the one DCI indicates scheduling data transmission on CC#0 and CC#5; or, the CIF indicates a starting carrier number of a plurality of carriers scheduled by the one DCI, and the one DCI schedules data transmission on consecutive N CCs with the CC indicated by CIF as a starting point; where N is configured by the high-level signaling, or N is determined by a predefined protocol, or N is indicated by a newly introduced first information field in the DCI. Further, a second information field can be introduced to indicate whether the DCI is used for multi-carrier scheduling. When the CIF field points to the CC where the DCI transmission is located, it means that simultaneous scheduling of multiple CCs is not supported at this time; when the one scheduling DCI for scheduling multiple CCs completely coincides with the PDCCH candidate of other scheduling DCI on the scheduling carrier, and the DCI format is the same, the terminal considers the DCI transmitted on the PDCCH candidate as the DCI for scheduling multiple CCs.

Alternatively, the CIF information field included in the one scheduling DCI is used to indicate the combination of N carriers except the scheduling carrier. The one scheduling DCI is used to indicate data transmission on N scheduled carriers other than the scheduling carrier; the combination of the N scheduled carriers is pre-configured through the high-level signaling and does not include the scheduling carrier; or the CIF indicates a starting carrier number of a plurality of carriers scheduled by the one DCI, and the one DCI schedules data transmission on consecutive N CCs with the CC indicated by CIF as the starting point, and N is determined by the following ways: N is configured through the high-level signaling; or, N is determined by a predefined protocol; or, N is indicated by a newly introduced first information field in DCI. Further, a second information field can be introduced to indicate whether the DCI is used for multi-carrier scheduling.

In the case of cross-carrier scheduling, a calculation method of a CCE corresponding to a PDCCH candidate is as follows:

in a case that a search space s and CORESET p (at most 48 CCEs) are interrelated, the calculation method of CCE index corresponding to PDCCH candidate $m_{s,n_{CI}}$ with an aggregation level of L is as follows:

$$L \times \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor N_{CCE,p}/L \right\rfloor \right\} + i \quad \text{formula (0)},$$

where L represents the aggregation level of PDCCH candidate; $m_{s,n_{CI}}$ represents the PDCCH candidate index, with a value range of $0, 1, 2, \ldots, M_{s,CI}^{(L)} - 1$; $M_{s,max}^{(L)}$ represents the total number of PDCCH candidate; $N_{CCE,p}$ represents the total number of CCEs in CORESET p; $n_{CI}$ represents an index of the scheduled carrier, with a value range of 1~8, and $Y_{p,n_{s,f}^{\mu}}$ represents a random number.

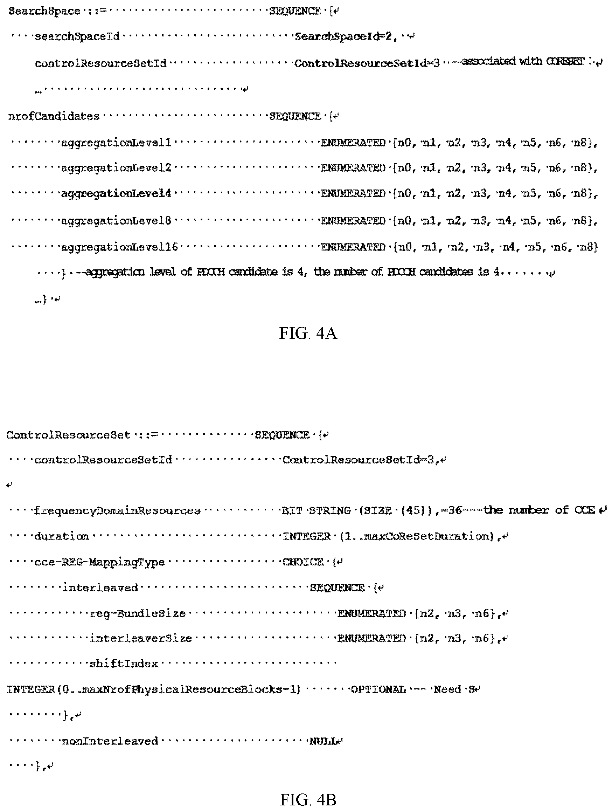

For a self-scheduling of DCI format 1_1, it is assumed that the configuration of its search space is as shown in FIG. 4A - FIG. 4B, and when the starting CCE of the PDCCH candidate is calculated, the input values $n_{CI} = 0$; $N_{CCE,p} = 32$; $m_{s,n_{CI}} = 0,1,2,3$; L = 4; $M_{s,max}^{(L)} = 8$, and the output value CCE index=0, 4, 8, 12.

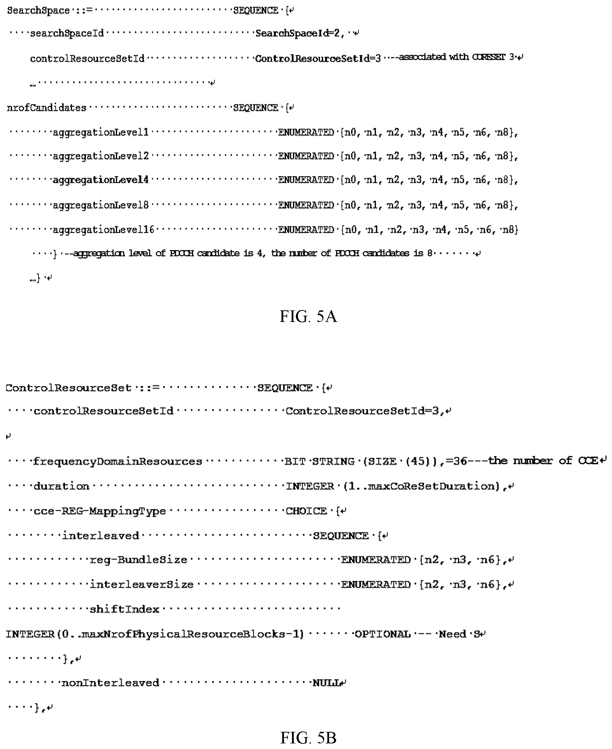

For the cross-carrier scheduling of DCI format 1_1, it is assumed that the configuration of its search space is as shown in FIG. 5A-FIG. 5B, and when the starting CCE of the PDCCH candidate is calculated, the input values $n_{CI} = 1$; $N_{CCE,p} = 32$; $m_{s,n_{CI}} = 0,1,2,3$; L = 8; $M_{s,max}^{(L)} = 8$, and the output value CCE index=4, 8, 12, 16, 20, 24, 28, 0.

Due to the introduction of $n_{CI}$ in formula (0), the cross-carrier scheduled PDCCH candidate and the self-scheduling PDC candidate can be staggered. When the network sends cross-carrier scheduled DCI and self-scheduling DCI on the same MO, it can reduce the occurrence that there is no resource to send DCI.

In addition, at present, the length of the cross-carrier indication field in DCI format 1_1 or 0_1 is 0 or 3 bits. If the cross-carrier scheduling is configured, it is 3 bit; otherwise, it is 0 bit.

In the prior art, the method for determining frequency-domain position of PDCCH candidate is aimed at a technical solution of one scheduled carrier, and the solution for determining frequency-domain position of the PDCCH candidate for a plurality of scheduled carriers is still under study. Moreover, the length of the existing cross-carrier scheduling indication field is 0 or 3bits, so the bit length cannot be adjusted according to the number of carriers configured for cross-carrier scheduling. When the number of carriers configured for cross-carrier scheduling is small, there are redundant bits in the cross-carrier scheduling indication field. In addition, multi-carrier scheduling will face the situation that one or more scheduled carriers in multiple scheduled carrier groups are deactivated/dormant, while other scheduled carriers are still not activated/dormant. Therefore, the problems of how to determine the frequency-domain position of the multi-carrier scheduling PDCCH candidate, determine the length of the multi-carrier scheduling indication field and the determination mode of the scheduled carrier when some scheduled carriers are deactivated/dormant are the key issues to be solved in multi-carrier scheduling.

The present application provides a method for determining frequency-domain position of PDCCH candidate in the multi-carrier scheduling. According to the method, a terminal can determine a starting CCE position of a PDCCH candidate in multi-carrier scheduling and monitor, so that the terminal can detect the multi-carrier scheduling DCI and then determine the scheduled carriers. The core idea of the embodiment designs of the present application is to determine the frequency-domain position of the PDCCH candidate for monitoring multi-carrier scheduling according to the offset.

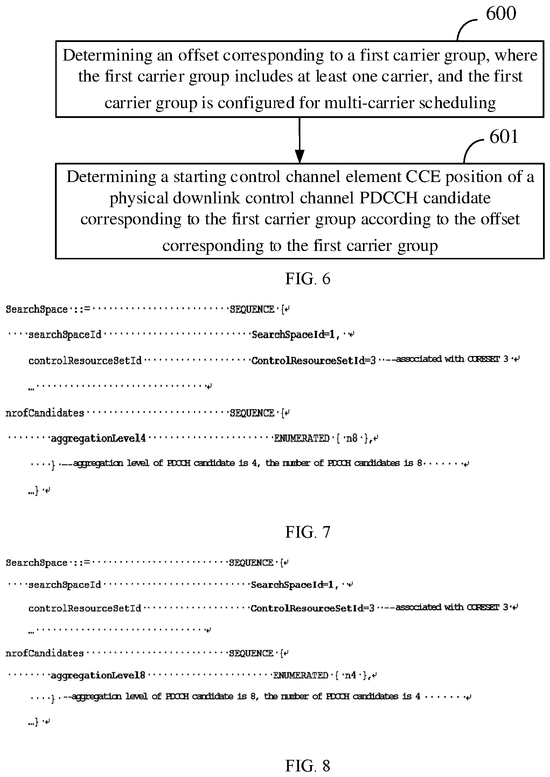

As shown in FIG. 6, the embodiment of the present disclosure provides a method for determining a frequency-domain position of a PDCCH candidate, and the implementation flow of the method is as follows:

Step 600, determining an offset corresponding to a first carrier group, where the first carrier group includes at least one carrier, and the first carrier group is configured for multi-carrier scheduling.

Where the first carrier group includes one or more carriers. The multiple carriers described here may be different carriers scheduled by a same DCI, the same carrier scheduled by different DCIs, or the carriers configured by the base station to the terminal.

It should be noted that the division granularity of the first carrier group can be varied, for example, the first carrier group can be determined according to the actually scheduled carriers, the first carrier group can also be determined according to the carriers configured by the base station to the terminal, and the first carrier group can also be determined according to the determined cell group, that is, the carriers corresponding to one cell group are in the same carrier group, and the carriers corresponding to different cell groups are in different carrier groups.

The first carrier group includes one or more carriers scheduled in a multi-carrier scheduling mode.

Step 601, determining a starting control channel element CCE position of a physical downlink control channel PDCCH candidate corresponding to the first carrier group according to the offset corresponding to the first carrier group.

In an implementation, the present application can determine the starting CCE position of the PDCCH candidate under multi-carrier scheduling through the offset.

Optionally, the offset in the present embodiment includes a first offset and/or a second offset, and the starting CCE position of the PDCCH candidate under multi-carrier scheduling can be determined by the first offset, or the starting CCE position of the PDCCH candidate under multi-carrier scheduling can be determined by the second offset, or the starting CCE position of the PDCCH candidate under multi-carrier scheduling can be determined by the first offset and the second offset.

The first offset in the present embodiment is determined as follows:

receiving a first radio resource control RRC signaling sent by a network side device, where the first RRC signaling carries a first configuration parameter, and the first configuration parameter is related to multi-carrier scheduling; determining the first offset corresponding to the first carrier group according to the first configuration parameter.

In the embodiment of the present disclosure, if the number of the first carrier groups is greater than 1, the first carrier groups and the offset satisfy that the offsets corresponding to different first carrier groups are the same, and/or, different.

In some embodiments, the offsets corresponding to different first carrier groups are the same, and/or, different, including one or more of the following:

the first kind, the offsets corresponding to different first carrier groups with a same designated cell identifier are the same, and/or the offsets corresponding to different first carrier groups with different designated cell identifiers are different.

Where the designated cell identifier is one cell identifier in a cell identifier set corresponding to one first carrier group, and the cell identifier set includes cell identifiers corresponding to respective scheduled carriers in the first carrier group.

In some embodiments, the designated cell identifier is the minimum value of the cell identifiers in the cell identifier set; or a maximum value of the cell identifiers in the cell identifier set.

Optionally, the relationship between the first carrier group and the offset is determined according to the cell identifier corresponding to each carrier contained in the first carrier group, and the corresponding relationship between each first carrier group and the offset can be described as follows:

Correspondence 1), the first carrier groups with the same minimum cell identifier correspond to the same offset, and the first carrier groups with different minimum cell identifiers correspond to different offsets; where the minimum cell identifier of each first carrier group is a minimum value among the cell identifiers of the carriers in the first carrier group. In an implementation, one or more first carrier groups correspond to an offset, where the first carrier groups with the same minimum cell identifier correspond to the same offset, and the first carrier groups with different minimum cell identifiers correspond to different offsets.

Correspondence 2), the first carrier groups with the same maximum cell identifier correspond to the same offset, and the first carrier groups with different maximum cell identifiers correspond to different offsets; where the maximum cell identifier of each first carrier group is the maximum value among the cell identifiers of the carriers in the first carrier group. In an implementation, one or more first carrier groups correspond to an offset, where the first carrier groups with the same maximum cell identifier correspond to the same offset, and the first carrier groups with different maximum cell identifiers correspond to different offsets.

The second kind, each first carrier group corresponds to one unique offset;

In an implementation, the first carrier group and the first offset are in one-to-one correspondence, one first carrier group corresponds to one first offset, and different first carrier groups correspond to the different first offsets.

The third kind, all the first carrier groups correspond to one offset; all the first carrier groups are all first carrier groups in a same cell group.

In some embodiments, the offset includes a second offset, where at least one carrier included in the first carrier group is configured for cross-carrier scheduling. That is, if at least one carrier included in the first carrier group is configured for cross-carrier scheduling, the offset of the first carrier group will include the second offset.

The offset corresponding to the first carrier group is determined as follows:

receiving a second RRC signaling sent by a network side device, where the second RRC signaling includes a second configuration parameter, and the second configuration parameter is related to cross-carrier scheduling;

determining the second offset corresponding to the first carrier group according to the second configuration parameter.

In some embodiments, if at least one carrier in the first carrier group under multi-carrier scheduling is configured for cross-carrier scheduling, the offset includes a first offset and a second offset; where the first offset is determined according to the first configuration parameter in the first RRC signaling, and the second offset is determined according to the second configuration parameter in the second RRC signaling.

In some embodiments, the second offset may be any one of the following:

the first kind, the second offset is a maximum value of cross-carrier scheduling indication indexes, where the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to the scheduling carrier of the first carrier group.

For example, terminal A is configured with multi-carrier scheduling, which includes eight scheduled carrier groups, and the scheduling carrier is CC0, the terminal is configured with cross-carrier scheduling on CC1, CC2, CC3, CC5 and CC6, and the cross-carrier scheduling indication indexes $n_{CI}$ correspond to 1, 2, 3, 4 and 5 respectively.

If the maximum value of the cross-carrier scheduling indication indexes is the maximum value of the cross-carrier scheduling indication indexes of all carriers configured for cross-carrier scheduling in the first carrier group, in this case, the second offset is = 5.

or, it is assumed that the scheduling carrier of CC1, CC2, CC3 and CC5 is CC0, and the maximum value of the cross-carrier scheduling indication indexes is the maximum value in the cross-carrier scheduling indication indexes of the carriers configured for cross-carrier scheduling corresponding to the scheduling carrier of the first carrier group, in this case, the second offset is =4.

In an implementation, if cross-carrier scheduling is configured on one or more carriers in multi-carrier scheduling, the second offset is the maximum value in the cross-carrier scheduling indication indexes of all carriers configured for cross-carrier scheduling in the first carrier group; if all the scheduled carriers are not configured with cross-carrier scheduling, the second offset =0.

or, if cross-carrier scheduling is configured on one or more scheduled carriers in multi-carrier scheduling, the second offset is the maximum value in the cross-carrier scheduling indication indexes of the carriers configured for cross-carrier scheduling corresponding to the scheduling carrier of the first carrier group; if all the scheduled carriers are not configured with cross-carrier scheduling, the second offset =0.

The second kind, the second offset is a preset value greater than or equal to zero.

In an implementation, if cross-carrier scheduling is configured on one or more scheduled carriers in multi-carrier scheduling, the second offset is 8; if all the scheduled carriers are not configured with cross-carrier scheduling, the second offset =0.

In some embodiments, the offset includes a first offset and a second offset, where at least one carrier included in the first carrier group is configured for cross-carrier scheduling;

determining the offset corresponding to the first carrier group includes:

determining that the first offset corresponding to the first carrier group is zero;

determining the second offset corresponding to the first carrier group according to a cross-carrier scheduling indication index value corresponding to a first carrier in the first carrier group; where the first carrier satisfies any one of the following:

the first kind, the first carrier is a carrier configured for multi-carrier scheduling and cross-carrier scheduling.

Where, the first carrier is configured with all relevant parameters for multi-carrier scheduling and corresponding relevant parameters for cross-carrier scheduling.

Then, determining that the second offset is the cross-carrier scheduling indication index value corresponding to the first carrier.

Where if the parameters, which correspond to the first carrier group and are related to multi-carrier scheduling, are configured on a scheduled carrier in the first carrier group, the second offset is a cross-carrier scheduling indication index value corresponding to the scheduled carrier.

In an implementation, if cross-carrier scheduling is configured on the carrier where the search space s corresponding to the first carrier group is located, the second offset is the cross-carrier scheduling indication index value configured by this carrier, and the first offset is zero; optionally, if cross-carrier scheduling is not configured on the carrier where the search space s corresponding to the first carrier group is located, the second offset is zero, and the first offset = the first configuration parameter configured by the high-layer signaling.

The second kind, the cell identifier corresponding to the first carrier is a minimum cell identifier among cell identifiers corresponding to carriers configured for cross-carrier scheduling in the first carrier group;

in an implementation, if cross-carrier scheduling is configured on one or more scheduled carriers in the first carrier group, the second offset is the cross-carrier scheduling indication index value corresponding to the first carrier in the first carrier group, where the cell identifier corresponding to the first carrier is the minimum cell identifier among the cell identifiers corresponding to the carriers configured for cross-carrier scheduling in the first carrier group; the first offset is zero; optionally, if cross-carrier scheduling is not configured on the carrier where the search space s corresponding to the first carrier group is located, the second offset is zero, and the first offset = the first configuration parameter configured by the high-layer signaling.

Mode c, the cell identifier corresponding to the first carrier is a maximum cell identifier among cell identifiers corresponding to carriers configured for cross-carrier scheduling in the first carrier group.

In an implementation, if cross-carrier scheduling is configured on one or more scheduled carriers in the first carrier group, the second offset is the cross-carrier scheduling indication index value corresponding to the first carrier in the first carrier group, where the cell identifier corresponding to the first carrier is the maximum cell identifier among the cell identifiers corresponding to respective carriers in the first carrier group, and the first offset is zero; optionally, if cross-carrier scheduling is not configured on the carrier where the search space s corresponding to the first carrier group is located, the second offset is zero, and the first offset = the first configuration parameter configured by the high-layer signaling.

In some embodiments, the offset includes a first offset and a second offset, where none of the carriers included in the first carrier group are configured for cross-carrier scheduling;

the determining the offset corresponding to the first carrier group includes:

determining the first offset corresponding to the first carrier group according to the first configuration parameter in the received first RRC signaling;

determining the second offset corresponding to the first carrier group is zero.

In an implementation, if the scheduled carriers in the first carrier group of multi-carrier scheduling are not configured with cross-carrier scheduling, the offset includes a first offset and a second offset, the second offset is determined to be zero; and the first offset is determined to be the first configuration parameter carried in the first RRC signaling.

In some embodiments, according to the offset corresponding to the first carrier group, determining a starting CCE position of the PDCCH candidate corresponding to a first carrier group is as follows:

determining the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; where all aggregation levels include the aggregation levels in the search space corresponding to the scheduled carriers of the first carrier group and/or the aggregation level in the search space corresponding to a single scheduled carrier.

In some embodiments, determining the starting CCE position of the PDCCH candidate corresponding to the first carrier group by the following formula includes:

$$S = L \times \left\{ \left( Y_{p,n_{s,f}^{\mu}} + \left\lceil \frac{m_{s,m\_n_{CI}} \cdot N_{CCE,p}}{L \cdot M_{s,max}^{(L)}} \right\rceil + n_{CI} + X \right) \bmod \lfloor N_{CCE,p}/L \rfloor \right\} + i; \text{ formula (1)};$$

Where S represents the starting CCE position of the PDCCH candidate corresponding to the first carrier group;

L represents the aggregation level of the PDCCH candidate in the search space corresponding to the first carrier group in the multi-carrier scheduling;

$N_{CCE,p}$ represents the number of CCEs in the physical resource set CORESET p associated with the search space corresponding to the first carrier group in the multi-carrier scheduling; where CORESET (control-resource set, a control-resource set) is composed of multiple RBs in frequency domain and 1/2/3 OFDM symbols in time domain.

$$m_{s,m\_n_{CI}} = \left[ 0, \ M_{s,m_{n_{CI}}}^{(L)} - 1 \right],$$

$M_{s,m\_n_{CI}}^{(L)}$ represents the number of the PDCCH candidates with the aggregation level of L in the search space corresponding to the first carrier group in the multi-carrier scheduling;

$M_{s,max}^{(L)}$ represents the number of all the maximum PDCCH candidates with aggregation level of L in the multi-carrier scheduling; where all aggregation levels include the aggregation levels in the search space corresponding to the scheduled carriers of the first carrier group and/or the aggregation level in the search space corresponding to a single scheduled carrier.

$$i = [0, \ L - 1];$$

where i is an integer; $Y_{p,n_{s,f}^{\mu}}$ represents a random number; $n_{CI}$ represents the second offset and X represents the first offset.

In some embodiments, the length of the indication field corresponding to the multi-carrier scheduling is determined according to the number of the first carrier group. In an implementation, if the number of the scheduled group is N, the length of the indication field corresponding to multi-carrier scheduling is $\lceil \log_2 N \rceil$. When the number of the first carrier group is 1, the length of the indication field corresponding to the multi-carrier scheduling is 0 bit.

In some embodiments, whether the first carrier group is valid is determined according to the activation state of at least one scheduled carrier in the first carrier group.

In some embodiments, the embodiment determines whether the first carrier group is valid according to the activation state of at least one scheduled carrier in the first carrier group in any of the following ways:

(1) determining that the first carrier group is invalid if at least one scheduled carrier in the first carrier group is in a deactivation or sleep mode;

where when the scheduled carrier is SCell and is deactivated or set in the sleep mode, the terminal considers that the first carrier group including the scheduled carrier is invalid.

(2) determining that the first carrier group is valid and data is not sent and received on the scheduled carrier in the deactivation or sleep mode if at least one scheduled carrier in the first carrier group is in the deactivation or sleep mode.

Where when the scheduled carrier is SCell and is deactivated or set in the sleep mode, the terminal considers that the first carrier group including the carrier is valid but cannot send and receive data on this carrier.

For example, the embodiment of the present application provides a first flow for determining a starting CCE position of a PDCCH candidate of the multi-carrier scheduling, where the terminal has cross-carrier scheduling on the scheduled carriers, and each first carrier group corresponds to one unique first offset.

In the following example, the carrier included in the first carrier group is the actually scheduled carrier, and the offsets corresponding to different first carriers are different.

Terminal A is configured with multi-carrier scheduling, which includes eight first carrier groups, and each of the first carrier groups includes one or more scheduled carriers. The scheduling carrier is CC0, and each first carrier group corresponds to one first offset X. As shown in Table 1, the terminal is configured with cross-carrier scheduling on the scheduled carriers CC1, CC2, CC3, CC5 and CC6, and the cross-carrier scheduling index corresponds to 1, 2, 3, 4 and 5 respectively, and the scheduling carrier of CC1, CC2, CC3 and CC5 is CC0, and the scheduling carrier of CC6 is CC7.

Table 1

| First carrier group number | Scheduled carrier | First offset X |
|---|---|---|
| 1 | CC1&CC2&CC3&CC4 | 1 |
| 2 | CC1&CC2&CC3 | 2 |
| 3 | CC1&CC2&CC4 | 3 |
| 4 | CC1&CC3&CC4 | 4 |
| 5 | CC2&CC3 | 5 |
| 6 | CC2&CC4 | 6 |
| 7 | CC3& CC4 | 7 |
| 8 | CC3 | 8 |

Where the search space of the multi-carrier scheduling DCI corresponding to the first carrier group 1 is configured on the scheduled carrier CC1. The search space corresponding to the scheduled carrier CC1 is identified as 1, that is, searchspaceID=1, and the number of PDCCH candidates with an aggregation level of 4 is 8. The specific configuration situation of the search space is shown in FIG. 7.

The search space of the multi-carrier scheduling DCI corresponding to the first carrier group 7 is configured on the scheduled carrier CC3. The search space corresponding to the scheduled carrier CC3 is identified as 1, that is, the searchspaceID=1, and the number of PDCCH candidates with an aggregation level of 8 is 4. The specific configuration situation of the search space is shown in FIG. 8.

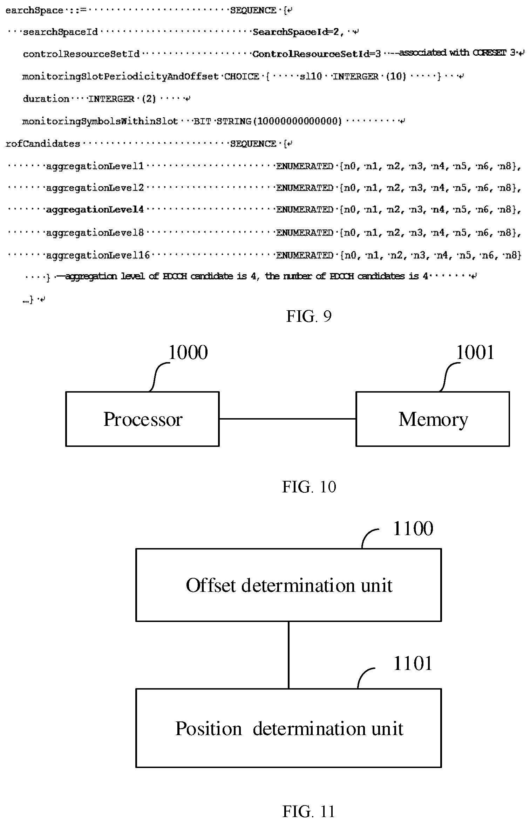

The scheduling carriers of the first carrier group 1 and the first carrier group 7 are CC0. The specific configuration situation of the search space 1, which is configured on CC0 and has the same search space identifier as the first carrier group 1 and the first carrier group 7, is shown in FIG. 9, where CORESET 3 is composed of 32 CCEs.

In an implementation, the terminal determines the starting CCE index value of the PDCCH candidate corresponding to the first carrier group 1 through the following formula:

$$S = L \times \left\{ \left( Y_{p,n_{s,f}^{\mu}} + \left\lfloor \frac{m_{s,m\_n_{CI}} \cdot N_{CCE,p}}{L \cdot M_{s,max}^{(L)}} \right\rfloor + n_{CI} + X \right) \bmod \left\lfloor N_{CCE,p}/L \right\rfloor \right\} + i \quad \text{formula (1)};$$

where S represents the starting CCE position of the PDCCH candidate corresponding to the first carrier group;

L represents the aggregation level of the PDCCH candidate in the search space corresponding to the first carrier group in the multi-carrier scheduling;

$N_{CCE,p}$ represents the number of CCEs in the physical resource set associated with the search space corresponding to the first carrier group in the multi-carrier scheduling;

$$m_{s,m\_n_{CI}} = \left[ 0, \ M_{s,m_{n_{CI}}}^{(L)} - 1 \right],$$

$M_{s,m\_n_{CI}}^{(L)}$ represents the number of the PDCCH candidates with the aggregation level of L in the search space corresponding to the first carrier group in the multi-carrier scheduling;

$M_{s,max}^{(L)}$ represents the number of the maximum PDCCH candidates with the aggregation level of L in the search spaces corresponding to the scheduled carriers of the first carrier group and/or with the aggregation level of L in the search space corresponding to a single scheduled carrier in the multi-carrier scheduling;

$$i = \left[ 0, \ L - 1 \right];$$

$Y_{p,n_{s,f}^{\mu}}$ represents a random number;

$n_{CI}$ represents the second offset;

X represents the first offset.

In an implementation, the first offset X is determined according to the first configuration parameter configured by high-layer signaling (the first RRC signaling).

The second offset can be determined in any one of the following modes:

Mode 1-2A, the second offset is the maximum value of the cross-carrier scheduling indication indexes, where the maximum value of the cross-carrier scheduling indication indexes is the maximum value of the cross-carrier scheduling indication indexes of all carriers configured for cross-carrier scheduling in the first carrier group;

where the cross-carrier scheduling indication indexes corresponding to all scheduled carriers configured with cross-carrier scheduling in the first carrier group correspond to 1, 2, 3, 4 and 5 respectively, and the second offset $n_{CI}$=5.

Mode 1-2B, the second offset is the maximum value of the cross-carrier scheduling indication indexes, where the maximum value of the cross-carrier scheduling indication indexes is the maximum value of the cross-carrier scheduling indication indexes of the carriers configured for cross-carrier scheduling corresponding to the scheduling carrier of the first carrier group;

Where the scheduling carrier corresponding to the first carrier group is CC0, and the cross-carrier indication indexes configured by the terminal on CC0 correspond to 1, 2, 3 and 4 respectively, and the second offset $n_{CI}$=4.

Mode 1-2C, if at least one scheduled carrier in the first carrier group is configured for cross-carrier scheduling under multi-carrier scheduling, the second offset $n_{CI}$ = 8; if none of the scheduled carriers in the first carrier group are configured with cross-carrier scheduling under multi-carrier scheduling, the second offset $n_{CI}$=0.

Where, in this example, the values in the above formula (1) are as follows:

L=4, represents the aggregation level of the PDCCH candidate in the search space 1 corresponding to the first carrier group 1; i=0, ...3; i is an integer between 0 and 3.

$N_{CCE,p}$ = 32, represents the number of CCEs in CORESET p associated with the search space s corresponding to the first carrier group 1;

$m_{s,m\_n_{CI}}$=0,...7, where $M_{s,m\_n_{CI}=}^{(L)} = 8$ is the number of PDCCH candidates with the aggregation level of L in the search space s corresponding to the first carrier group 1;

$M_{s,max}^{(L)}$=8, because the number of PDCCH candidates with aggregation level of 4 in the search space 1 corresponding to the first carrier group 1 is 8; the number of PDCCH candidates with aggregation level of 4 in the search space 1 corresponding to the first carrier group 7 is 4; the number of PDCCH candidates with aggregation level of 4 in search space 1 on the scheduling carrier is 4. Therefore, $M_{s,max}^{(L)}$ takes the maximum number 8 of PDCCH candidates.

Optionally, in the present embodiment, the first offset and the second offset can also be determined by the following method:

if the parameters, which correspond to the first carrier group and are related to multi-carrier scheduling, are configured on CC1 in the first carrier group, the first offset X = 0; the second offset $n_{CI}$=1, that is, the second offset is the cross-carrier scheduling indication index value corresponding to CC1.

Optionally, in the present embodiment, the first offset and the second offset can also be determined by the following method:

if the cross-carrier scheduling is configured on CC1, CC2, CC3 and CC4 in the first carrier group, the first offset X = 0; the cross-carrier scheduling index value, which corresponds to the second offset $n_{CI}$ = CC1, = 1.

If CC1, CC2, CC3 and CC4 in the first carrier group are not configured with cross-carrier scheduling, the second offset $n_{CI}$ = 0, and the first offset X= the first configuration parameter configured by the higher layer =1.

Optionally, in the present embodiment, the terminal can determine the length of the indication field corresponding to the multi-carrier scheduling, i.e., the length of the multi-carrier indication field in the multi-carrier scheduling DCI, in the following method, where there are 8 first carrier groups configured for the terminal, and the length of the indication field is

$$\lceil \log_2 8 \rceil = 3$$

Optionally, if at least one scheduled carrier in the first carrier group is in a deactivation or sleep mode, the first carrier group is determined to be invalid; or, if at least one scheduled carrier in the first carrier group is in a deactivated or sleep mode, the first carrier group is determined to be valid and data is not sent and received on the scheduled carrier in the deactivated or sleep mode.

For example, the embodiment of the present application also provides a flow for determining the starting CCE position of the PDCCH candidate of the multi-carrier scheduling, where the terminal has no cross-carrier scheduling on the scheduling carrier and has cross-carrier scheduling on other carriers except the scheduling carrier, and each first carrier group corresponds to a unique first offset.

The terminal A is configured with multi-carrier scheduling, which includes eight first carrier groups, and each of the first carrier groups includes one or more scheduled carriers; the scheduling carrier is CC0, and each first carrier group corresponds to the first offset X of one PDCCH candidate, as shown in Table 2. The terminal has no cross-carrier scheduling on the scheduling carrier CC0, but can cross-carrier schedule CC6 on the scheduling carrier CC7, and the cross-carrier scheduling indication index is 1.

Table 2

| First carrier group number | Scheduled carrier | First offset x |
|---|---|---|
| 1 | CC1&CC2&CC3&CC4 | 1 |
| 2 | CC1&CC2&CC3 | 2 |
| 3 | CC1&CC2&CC4 | 3 |
| 4 | CC1&CC3&CC4 | 4 |
| 5 | CC2&CC3 | 5 |
| 6 | CC2&CC4 | 6 |
| 7 | CC3& CC4 | 7 |
| 8 | CC3 | 8 |

In an implementation, the terminal determines the starting CCE index value of the PDCCH candidate corresponding to the first carrier group 1 through the following formula:

$$S = L \times \left\{ \left( Y_{p,n_{s,f}^\mu} + \left\lceil \frac{m_{s,m\_n_{CI}} \cdot N_{CCE,p}}{L \cdot M_{s,max}^{(L)}} \right\rceil + n_{CI} + X \right) \mod \lfloor N_{CCE,p}/L \rfloor \right\} + i \quad \text{formula (1)}$$

where S represents the starting CCE position of the PDCCH candidate corresponding to the first carrier group;

L represents the aggregation level of the PDCCH candidate in the search space corresponding to the first carrier group in the multi-carrier scheduling;

$N_{CCE,p}$ represents the number of CCEs in the physical resource set associated with the search space corresponding to the first carrier group in the multi-carrier scheduling;

$$m_{s,m\_n_{CI}} = \left[ 0, \ M_{s,m_{n_{CI}}}^{(L)} - 1 \right],$$

$M_{s,m\_n_{CI}}^{(L)}$ represents the number of the PDCCH candidates with the aggregation level of L in the search space corresponding to the first carrier group in the multi-carrier scheduling;

$M_{s,max}^{(L)}$ represents the number of the maximum PDCCH candidates with the aggregation level of L in the search spaces corresponding to all the first carrier groups and/or a single scheduled carrier in the multi-carrier scheduling;

$$i = \left[ 0, \ L - 1 \right];$$

$Y_{p,n_{s,f}^{\mu}}$ represents a random number;

$n_{CI}$ represents the second offset;

X represents the first offset.

In an implementation, the first offset X is determined according to the first configuration parameter configured by high-layer signaling (RRC signaling). For the first carrier groups numbered from 1 to 8, X is the corresponding first configuration parameter configured by the high layer.

The second offset can be determined in any one of the following modes:

Mode 1-2A, the second offset is the maximum value of the cross-carrier scheduling indication indexes, where the maximum value of the cross-carrier scheduling indication indexes is the maximum value of the cross-carrier scheduling indication indexes of all carriers configured for cross-carrier scheduling in the first carrier group;

where the cross-carrier indication indexes configured for the terminal correspond to 1 respectively, and the second offset $n_{CI} = 1$.

Mode 1-2B, the second offset is the maximum value of the cross-carrier scheduling indication indexes, where the maximum value of the cross-carrier scheduling indication indexes is the maximum value of the cross-carrier scheduling indication indexes of the carriers configured for cross-carrier scheduling corresponding to the scheduling carrier of the first carrier group;

where the terminal is not configured with cross-carrier scheduling on CC0, and the second offset $n_{CI} = 0$.

Mode 1-2C, if at least one scheduled carrier in the first carrier group is configured for cross-carrier scheduling under multi-carrier scheduling, the second offset $n_{CI} = 8$; if none of the scheduled carriers in the first carrier group are configured with cross-carrier scheduling under multi-carrier scheduling, the second offset $n_{CI}=0$.

Optionally, in the present embodiment, the terminal can determine the length of the indication field corresponding to the multi-carrier scheduling, i.e., the length of the multi-carrier indication field in the multi-carrier scheduling DCI, in the following way, where there are 8 first carrier groups configured for the terminal, and the length of the indication field is

$$\lceil \log_2 8 \rceil = 3$$
.

For example, the embodiment of the present application provides a first flow for determining the starting CCE position of the PDCCH candidate of the multi-carrier scheduling, where the terminal is not configured for cross-carrier scheduling, and each first carrier group corresponds to a unique first offset.

The terminal A is configured with multi-carrier scheduling, which includes eight first carrier groups, and each of first carrier groups includes one or more scheduled carriers; the scheduling carrier is CC0, and each first carrier group corresponds to one first offset X, as shown in Table 3, the terminal is not configured with cross-carrier scheduling.

Table 3

| First carrier group number | Scheduled carrier | First offset X |
|---|---|---|
| 1 | CC1&CC2&CC3&CC4 | 1 |
| 2 | CC1&CC2&CC3 | 2 |
| 3 | CC1&CC2&CC4 | 3 |
| 4 | CC1&CC3&CC4 | 4 |
| 5 | CC2&CC3 | 5 |
| 6 | CC2&CC4 | 6 |
| 7 | CC3& CC4 | 7 |
| 8 | CC3 | 8 |

In an implementation, the terminal determines the starting CCE index value of the PDCCH candidate corresponding to the first carrier group 1 through the following formula:

$$S = L \times \left\{ \left( Y_{p,n_{s,f}^{\mu}} + \left\lfloor \frac{m_{s,m\_n_{CI}} \cdot N_{CCE,p}}{L \cdot M_{s,max}^{(L)}} \right\rfloor + n_{CI} + X \right) \bmod \lfloor N_{CCE,p}/L \rfloor \right\} + i \quad \text{formula (1)}$$

where S represents the starting CCE position of the PDCCH candidate corresponding to the first carrier group;

L represents the aggregation level of the PDCCH candidate in the search space corresponding to the first carrier group in the multi-carrier scheduling;

$N_{CCE,p}$ represents the number of CCEs in the physical resource set associated with the search space corresponding to the first carrier group in the multi-carrier scheduling;

$$m_{s,m\_n_{CI}} = \left[0, \; M^{(L)}_{s,m_{n_{CI}}} - 1\right],$$

$M^{(L)}_{s,m\_n_{CI}}$ represents the number of the PDCCH candidates with the aggregation level of L in the search space corresponding to the first carrier group in the multi-carrier scheduling;

$M^{(L)}_{s,max}$ represents the number of the maximum PDCCH candidates with the aggregation level of L in the search spaces corresponding to all the first carrier groups and/or a single scheduled carrier in the multi-carrier scheduling;

$$i = \left[0, \; L - 1\right];$$

$Y_{p,n^{\mu}_{s,f}}$ represents a random number;

$n_{CI}$ represents the second offset;

X represents the first offset.

In an implementation, the first offset X is determined according to the first configuration parameter configured by the high-layer signaling (RRC signaling). For the first carrier groups numbered from 1 to 8, X is the corresponding first configuration parameter configured by the high layer.

The second offset can be determined in the following mode:

since none of the scheduled carriers in the first carrier group are configured with cross-carrier scheduling under multi-carrier scheduling, the second offset $n_{CI}=0$.

Optionally, in the present embodiment, the terminal can determine the length of the indication field corresponding to the multi-carrier scheduling, i.e., the length of the multi-carrier indication field in the multi-carrier scheduling DCI, in the following way, where there are 8 first carrier groups configured for the terminal, and the length of the indication field is

$$\lceil \log_2 8 \rceil = 3$$
.

For example, the embodiment of the present application also provides a flow for determining the starting CCE position of PDCCH candidate of the multi-carrier scheduling, where the terminal A is configured with the multi-carrier scheduling, and the multi-carrier scheduling includes eight first carrier groups, each of the first carrier groups includes one or more scheduled carriers, the scheduling carrier is CC0, and the first offsets corresponding to different first carrier groups are the same.

The corresponding relationship between the first carrier group and the offset is determined according to the cell identification of each scheduled carrier in the first carrier group, and the base station configures the same first offset for the first carrier groups with the same minimum cell identification in the first carrier group (for example, the first carrier group 1, the first carrier group 2, the first carrier group 3 and the first carrier group 4 shown in Table 4, and the minimum cell identification is CC1, then the first offsets corresponding to the first carrier group 1, the first carrier group 2, the first carrier group 3 and the first carrier group 4 are the same), and different first offsets are configured for the first carrier groups with the different minimum cell identifications in the first carrier group (for example, the first carrier group 1 shown in Table 4, whose the minimum cell identification is CC1; for the first carrier group 5, the minimum cell identifier is CC2, so that the first offsets corresponding to the first carrier group 1 and the first carrier group 5 are different), as shown in Table 4.

Table 4

| First carrier group number | Scheduled carrier | First offset X |
|---|---|---|
| 1 | CC1&CC2&CC3&CC4 | 1 |
| 2 | CC1&CC2&CC3 | |
| 3 | CC1&CC2&CC4 | |
| 4 | CC1&CC3&CC4 | |
| 5 | CC2&CC3 | 2 |
| 6 | CC2&CC4 | |
| 7 | CC3& CC4 | 3 |
| 8 | CC3 | |

In an implementation, the terminal determines the starting CCE index value of the PDCCH candidate corresponding to the first carrier group 1 through the following formula:

$$S = L \times \left\{ \left( Y_{p,n_{s,f}^{\mu}} + \left\lfloor \frac{m_{s,m\_n_{CI}} \cdot N_{CCE,p}}{L \cdot M_{s,max}^{(L)}} \right\rfloor + n_{CI} + X \right) \bmod \lfloor N_{CCE,p}/L \rfloor \right\} + i \quad \text{formula (1)}$$

where S represents the starting CCE position of the PDCCH candidate corresponding to the first carrier group;
L represents the aggregation level of the PDCCH candidate in the search space corresponding to the first carrier group in the multi-carrier scheduling;
$N_{CCE,p}$ represents the number of CCEs in the physical resource set associated with the search space corresponding to the first carrier group in the multi-carrier scheduling;

$$m_{s,m\_n_{CI}} = \left[ 0, \ M_{s,m_{n_{CI}}}^{(L)} - 1 \right],$$

$M_{s,m\_n_{CI}}^{(L)}$ represents the number of the PDCCH candidates with the aggregation level of L in the search space corresponding to the first carrier group in the multi-carrier scheduling;

$M_{s,max}^{(L)}$ represents the number of the maximum PDCCH candidates with the aggregation level of L in the search spaces corresponding to all the first carrier groups and/or a single scheduled carrier in the multi-carrier scheduling;

$$i = \left[ 0, \ L - 1 \right];$$

$Y_{p,n_{s,f}^{\mu}}$ represents a random number;
$n_{CI}$ represents the second offset;
X represents the first offset.

In an implementation, the first offset X is determined according to the first configuration parameter configured by high-layer signaling (RRC signaling).
The second offset can be determined in any one of the following modes:

Mode 1-2A, the second offset is the maximum value of the cross-carrier scheduling indication indexes, where the maximum value of the cross-carrier scheduling indication indexes is the maximum value of the cross-carrier scheduling indication indexes of all carriers configured for cross-carrier scheduling in the first carrier group;
Mode 1-2B, the second offset is the maximum value of the cross-carrier scheduling indication indexes, where the maximum value of the cross-carrier scheduling indication indexes is the maximum value of the cross-carrier scheduling indication indexes of the carriers configured for cross-carrier scheduling corresponding to the scheduling carrier of the first carrier group;

Mode 1-2C, if at least one scheduled carrier in the first carrier group is configured for cross-carrier scheduling under multi-carrier scheduling, the second offset $n_{CI}$ = 8; if none of the scheduled carriers in the first carrier group are configured with cross-carrier scheduling under multi-carrier scheduling, the second offset $n_{CI}$=0.

Optionally, in the present embodiment, the first offset and the second offset can also be determined by the following method:

if the parameters, which correspond to the first carrier group and are related to multi-carrier scheduling, are configured on CC1 in the first carrier group, the first offset X = 0; the second offset $n_{CI}$=1, that is, the second offset is the cross-carrier scheduling indication index value corresponding to CC1.

Optionally, in the present embodiment, the first offset and the second offset can also be determined by the following method:

if the cross-carrier scheduling is configured on CC1, CC2, CC3 and CC4 in the first carrier group, the first offset X = 0; the cross-carrier scheduling index value, which corresponds to the second offset $n_{CI}$ = CC1, = 1.

If CC1, CC2, CC3 and CC4 in the first carrier group are not configured with cross-carrier scheduling, the second offset $n_{CI}$ = 0, and the first offset X= the first configuration parameter configured by the higher layer =1.

Optionally, in the present embodiment, the terminal can determine the length of the indication field corresponding to the multi-carrier scheduling, i.e., the length of the multi-carrier indication field in the multi-carrier scheduling DCI, in the following method, where there are 8 first carrier groups configured for the terminal, and the length of the indication field is

$$\lceil \log_2 8 \rceil = 3$$

.

For example, the embodiment of the present application also provides a flow for determining the starting CCE position of the PDCCH candidate of the multi-carrier scheduling, where the terminal A is configured with multi-carrier scheduling, which includes eight first carrier groups, and each of first carrier groups includes one or more scheduled carriers; the scheduling carrier is CC0.

The base station configures the same first offset for all the first carrier groups, as shown in Table 5.

Table 5

| First carrier group number | Scheduled carrier | First offset X |
|---|---|---|
| 1 | CC1&CC2&CC3&CC4 | 1 |
| 2 | CC1&CC2&CC3 | |
| 3 | CC1&CC2&CC4 | |
| 4 | CC1&CC3&CC4 | |
| 5 | CC2&CC3 | |
| 6 | CC2&CC4 | |
| 7 | CC3& CC4 | |
| 8 | CC3 | |

It should be noted that since the scheduled carriers are CC1, CC2, CC3 and CC4, assuming that these four carriers belong to one cell set, so the first carrier groups 1-8 here can be regarded as one carrier group, which is collectively referred to as the first carrier group, and the first offset corresponding to this first carrier group is 1. Even though CC1, CC2, CC3 and CC4 may be scheduled by different terminals, it means that the first offset corresponding to the first carrier group determined by these terminals is 1.

In an implementation, the terminal determines the starting CCE index value of the PDCCH candidate corresponding to the first carrier group 1 through the following formula:

$$S = L \times \left\{ \left( Y_{p,n_{s,f}^{\mu}} + \left\lfloor \frac{m_{s,m\_n_{CI}} \cdot N_{CCE,p}}{L \cdot M_{s,max}^{(L)}} \right\rfloor + n_{CI} + X \right) \bmod \lfloor N_{CCE,p}/L \rfloor \right\} + i \quad \text{formula (1)};$$

where S represents the starting CCE position of the PDCCH candidate corresponding to the first carrier group;

L represents the aggregation level of the PDCCH candidate in the search space corresponding to the first carrier group in the multi-carrier scheduling;

$N_{CCE,p}$ represents the number of CCEs in the physical resource set associated with the search space corresponding to the first carrier group in the multi-carrier scheduling;

$$m_{s,m\_n_{CI}} = \left[0, \ M^{(L)}_{s,m_{n_{CI}}} - 1\right],$$

$M^{(L)}_{s,m\_n_{CI}}$ represents the number of the PDCCH candidates with the aggregation level of L in the search space corresponding to the first carrier group in the multi-carrier scheduling;

$M^{(L)}_{s,max}$ represents the number of the maximum PDCCH candidates with the aggregation level of L in the search spaces corresponding to all the first carrier groups and/or a single scheduled carrier in the multi-carrier scheduling;

$$i = \left[0, \ L - 1\right];$$

$Y_{p,n^{\mu}_{s,f}}$ represents a random number;
$n_{CI}$ represents the second offset;
X represents the first offset.

In an implementation, the first offset X is determined according to the first configuration parameter configured by high-layer signaling (RRC signaling).

The second offset can be determined in any one of the following modes:

Mode 1-2A, the second offset is the maximum value of the cross-carrier scheduling indication indexes, where the maximum value of the cross-carrier scheduling indication indexes is the maximum value of the cross-carrier scheduling indication indexes of all carriers configured for cross-carrier scheduling in the first carrier group;

Mode 1-2B, the second offset is the maximum value of the cross-carrier scheduling indication indexes, where the maximum value of the cross-carrier scheduling indication indexes is the maximum value of the cross-carrier scheduling indication indexes of the carriers configured for cross-carrier scheduling corresponding to the scheduling carrier of the first carrier group;

Mode 1-2C, if at least one scheduled carrier in the first carrier group is configured for cross-carrier scheduling under multi-carrier scheduling, the second offset $n_{CI} = 8$; if none of the scheduled carriers in the first carrier group are configured with cross-carrier scheduling under multi-carrier scheduling, the second offset $n_{CI}=0$.

Optionally, in the present embodiment, the first offset and the second offset can also be determined by the following method:

if the parameters, which correspond to the first carrier group and are related to multi-carrier scheduling, are configured on CC1 in the first carrier group, the first offset X = 0; the second offset $n_{CI}=1$, that is, the second offset is the cross-carrier scheduling indication index value corresponding to CC1.

The following takes the carrier included in the first carrier group being a carrier included in a cell group as an example.

For example, the embodiment of the present application also provides a flow for determining the starting CCE position of the PDCCH candidate for multi-carrier scheduling. Where the terminal A is configured with two multi-carrier scheduling cell groups, where the multi-carrier scheduling cell group 1 includes CC1, CC2, CC3 and CC4, and the multi-carrier scheduling cell group 2 includes CC5, CC6 and CC7. For cell group 1, the multi-carrier scheduling includes 15 first carrier groups which correspond to the first offset X1, as shown in Table 6. For cell group 2, the multi-carrier scheduling includes 7 first carrier groups which correspond to the first offset X2, as shown in Table 7. The first carrier groups corresponding to the different cell groups correspond to different first offsets. The first carrier groups corresponding to the same cell group correspond to the same first offset.

Table 6

| First carrier group number | Scheduled carrier | First offset X1 |
|---|---|---|
| 1 | CC1 | 6 |
| 2 | CC2 | |

(continued)

| First carrier group number | Scheduled carrier | First offset X1 |
|---|---|---|
| 3 | CC1&CC2 | |
| 4 | CC3 | |
| 5 | CC1&CC3 | |
| 6 | CC2&CC3 | |
| 7 | CC1&CC2&CC3 | |
| 8 | CC4 | |
| 9 | CC1&CC4 | |
| 10 | CC2&CC4 | |
| 11 | CC1&CC2&CC4 | |
| 12 | CC3&CC4 | |
| 13 | CC1&CC3&CC4 | |
| 14 | CC2&CC3&CC4 | |
| 15 | CC1&CC2&CC3&CC4 | |

Table 7

| First carrier group number | Scheduled carrier | First offset X2 |
|---|---|---|
| 1 | CC5 | 9 |
| 2 | CC6 | |
| 3 | CC5&CC6 | |
| 4 | CC7 | |
| 5 | CC5&CC7 | |
| 6 | CC6&CC7 | |
| 7 | CC5&CC6&CC7 | |

In an implementation, the terminal determines the starting CCE index values of the PDCCH candidates corresponding to all the first carrier groups in cell group 1 by the following formula:

$$S = L \times \left\{ \left( Y_{p,n_{s,f}^\mu} + \left\lfloor \frac{m_{s,m\_n_{CI}} \cdot N_{CCE,p}}{L \cdot M_{s,max}^{(L)}} \right\rfloor + n_{CI} + X \right) \mod \lfloor N_{CCE,p}/L \rfloor \right\} + i \quad \text{formula (1)};$$

where S represents the starting CCE position of the PDCCH candidate corresponding to the first carrier group;
L represents the aggregation level of the PDCCH candidate in the search space corresponding to the first carrier group in the cell group 1;
$N_{CCE,p}$ represents the number of CCEs in the physical resource set associated with the search space corresponding to the first carrier group in the cell group 1;

$$m_{s,m\_n_{CI}} = \left[0, \ M_{s,m_{n_{CI}}}^{(L)} - 1\right],$$

$M_{s,m\_n_{CI}}^{(L)}$ represents the number of the PDCCH candidates with the aggregation level of L in the search space corresponding to the first carrier group in the cell group 1;

$$M_{s,max}^{(L)}$$ represents the number of the maximum PDCCH candidates with the aggregation level of L in the search spaces corresponding to all the first carrier groups and/or a single scheduled carrier in the cell group 1;

$$i = \begin{bmatrix} 0, & L-1 \end{bmatrix};$$

$$Y_{p,n_{s,f}^{\mu}}$$ represents a random number;

$n_{CI}$ represents the second offset corresponding to the cell group 1;

X1 represents the first offset corresponding to the cell group 1.

The starting CCE index values of the PDCCH candidates corresponding to all the first carrier groups in cell group 2 are calculated according to the search space parameters configured by cell group 2 and the configured first offset X2.

In an implementation the first offset X is determined according to the first configuration parameter configured by high-layer signaling (RRC signaling). For one cell group, all the first carrier groups correspond to one same first offset X. The first offsets X corresponding to different cell groups are different.

The carriers included in the first carrier group can be understood as a cell combination composed of any cells in the cell group. All the first carrier groups of a cell group refer to a subset or a complete set formed by any combination of cells in the cell group.

Optionally, in the case of cross-carrier scheduling, the second offset may be a preset value greater than or equal to zero. Specifically, the second offset can be determined in any one of the following modes:

Mode 1-2D, the second offset is configured by the high layer or defaults to a preset value. For example, the second offset defaults to 0 and $n_{CI}=0$. Or, in the multi-carrier scheduling, the second offset is configured by the high layer as $n_{CI}=n$.

Optionally, in the present embodiment, the first offset and the second offset can also be determined by the following method:

if the cross-carrier scheduling is configured on CC1, CC2, CC3 and CC4 in the first carrier group, the first offset X = 0; the cross-carrier scheduling index value, which corresponds to the second offset $n_{CI}$ = CC1, = 1.

If the first carrier groups CC1, CC2, CC3 and CC4 are not configured with the cross-carrier scheduling, the second offset $n_{CI}$ = 0, and the first offset X= the first configuration parameter configured by the high-layer =1.

Optionally, in the present embodiment, the terminal can determine the length of the indication field corresponding to the multi-carrier scheduling, i.e., the length of the multi-carrier indication field in the multi-carrier scheduling DCI, in the following method, where there are 8 first carrier groups configured for the terminal, and the length of the indication field is

$$\lceil \log_2 8 \rceil = 3$$.

It should be noted that the number of first carrier groups can be understood as the number of all first carrier groups in the same cell group.

The following describes how the base station configures multiple cell groups for the terminal and how to indicate the cell groups.

In an implementation, the terminal distinguishes the cell groups of the multi-carrier scheduling through the cell group indication field in multi-carrier scheduling DCI. This scheme can be applied to the scenario that multiple cell groups configured by the network correspond to the same scheduling carrier or when the lengths of the multi-carrier scheduling DCIs corresponding to multiple cell groups are the same, the length and indication mode of the cell group indication field are as follows:

when the terminal supports configuring two cell groups at most, if the terminal is configured with only one cell group, the length of the cell group indication field is 0 bit; if the terminal is configured with two cell groups, the length of the cell group indication field is 1 bit.

When the cell group indication field is 0, it is indicated that the first carrier group in cell group 1 is scheduled, and when the indication field is 1, it is indicated that the first carrier group in cell group 2 is scheduled. The terminal needs to combine the cell group indication field and the multi-carrier scheduling indication field to determine the scheduled first carrier group.

Or, when the terminal is configured with n cell groups, if the terminal is configured with only one cell group, the length of the cell indication field is 0 bit; if the terminal is configured with multiple cell groups, the length of the cell group indication field is $\lceil \log_2 n \rceil$ bit, and the codeword of each indication field corresponds to one cell group, and the corresponding relationship is configured or preconfigured by the high layer.

For example, if the terminal is configured with three cell groups, the length of the cell group indication field is 2 bits.

According to the high-layer configuration or pre-configuration information, "01" corresponds to cell group 1, "10" corresponds to cell group 2 and "11" corresponds to cell group 3. The terminal determines the scheduled first carrier group according to the cell group indication field and the multi-carrier scheduling indication field.

Or, when the terminal supports configuring N cell groups at most, if the terminal is configured with only one cell group, the length of the cell group indication field is 0 bit; if the terminal is configured with multiple cell groups, the length of the cell group indication field is $\log_2 N$ bit, and the codeword of each indication field corresponds to one cell group, and the corresponding relationship is directly or indirectly determined by the first offset configured by the high layer for each cell group.

For example, the terminal supports configuring 8 cell groups at most, and actually is configured 4 cell groups, then the length of the cell indication field is 3 bits. According to the first offset X configured by the high layer, the value range is [1, 8]. The codeword of the cell group indication field is the same as the value of the first offset X. If the first offset values corresponding to cell groups 1 to 4 are 2, 4, 5 and 8, respectively, when the codeword of the cell group indication field is 8, the scheduled cell group is cell group 4. Alternatively, according to the first offset X configured by the high layer, the value range is [9, 16], and the codeword of the cell group indication field is the same as the value of the first offset [X-8]. If the first offset values corresponding to cell groups 1 to 4 are 9, 10, 11 and 12 respectively, when the codeword of the cell group indication field is 1, the scheduled cell group is cell group 1.

It should be noted that the indication method of the cell indication field is applied to multiple cell groups corresponding to the same scheduling carrier. Or, multiple cell groups correspond to the same scheduling carrier, and the lengths of DCIs for scheduling different cell groups are same.

For example, the embodiment of the present application also provides a flow for determining the starting CCE position of the PDCCH candidate for multi-carrier scheduling, where the terminal A is configured with multi-carrier scheduling, which includes six first carrier groups, each of first carrier groups includes a plurality of scheduled carriers, and the scheduling carrier is CC0. The terminal has configured with cross-carrier scheduling on CC1 and CC2, and the cross-carrier scheduling indication indexes correspond to 1 and 2 respectively.

The first offset is assigned to zero, and the second offset is the cross-carrier scheduling indication index value corresponding to the scheduled carrier with the minimum cell identification among all the scheduled carriers in the first carrier group. As shown in Table 8.

Table 8

| First carrier group number | Scheduled carrier | First offset | Second offset |
|---|---|---|---|
| 1 | CC1&CC2&CC3&CC4 | X=0 | CC1, $n_{CI}$ = 1 |
| 2 | CC1&CC2&CC3 | X=0 | CC1, $n_{CI}$ = 1 |
| 3 | CC1&CC2&CC4 | X=0 | CC1, $n_{CI}$ = 1 |
| 4 | CC2&CC3 | X=0 | CC2, $n_{CI}$ = 2 |
| 5 | CC2&CC4 | X=0 | CC2, $n_{CI}$ = 2 |
| 6 | CC3&CC4 | X= first configuration parameter | $n_{CI}$ = 0 |

In an implementation, the terminal determines the starting CCE index value of the PDCCH candidate corresponding to the first carrier group 1 through the following formula:

$$S = L \times \left\{ \left( Y_{p,n_{s,f}^{\mu}} + \left\lceil \frac{m_{s,m\_n_{CI}} \cdot N_{CCE,p}}{L \cdot M_{s,max}^{(L)}} \right\rceil + n_{CI} + X \right) \bmod \lfloor N_{CCE,p}/L \rfloor \right\} + i \quad \text{formula (1)};$$

where S represents the starting CCE position of the PDCCH candidate corresponding to the first carrier group;

L represents the aggregation level of the PDCCH candidate in the search space corresponding to the first carrier group in the multi-carrier scheduling;

$N_{CCE,p}$ represents the number of CCEs in the physical resource set associated with the search space corresponding to the first carrier group in the multi-carrier scheduling;

$$m_{s,m\_n_{CI}} = \left[ 0, \ M_{s,m_{n_{CI}}}^{(L)} - 1 \right],$$

$M_{s,m\_n_{CI}}^{(L)}$ represents the number of the PDCCH candidates with the aggregation level of L in the search space corresponding to the first carrier group in the multi-carrier scheduling;

$M_{s,max}^{(L)}$ represents the number of the maximum PDCCH candidates with the aggregation level of L in the search space corresponding to all the first carrier groups and/or a single scheduled carrier in the multi-carrier scheduling;

$$i = \begin{bmatrix} 0, & L - 1 \end{bmatrix};$$

$Y_{p,n_{s,f}^{\mu}}$ represents a random number;

$n_{CI}$ represents the second offset;

X represents the first offset.

In an implementation, the first offset X is zero, and the second offset is the cross-carrier scheduling indication index value corresponding to the scheduled carrier with the minimum cell identification among all the scheduled carriers in the first carrier group;

when cross-carrier scheduling is not configured for each scheduled carrier in the first carrier group, the second offset is zero, and the first offset is determined according to the first configuration parameter configured by high-layer signaling (RRC signaling).

For example, if at least one scheduled carrier in the first carrier group is in a deactivation or sleep mode, it is determined that the first carrier group is invalid, for example, the scheduled carrier CC3 is in a deactivation state, and the above table 1 is updated to table 9.

Table 9

| First carrier group number | Cell identification number of the scheduled carrier |
|---|---|
| 1 | CC1&CC2&CC3&CC4 (invalid) |
| 2 | CC1&CC2&CC3 (invalid) |
| 3 | CC1&CC2&CC4 |
| 4 | CC1&CC3&CC4 (invalid) |
| 5 | CC2&CC3 (invalid) |
| 6 | CC2&CC4 |
| 7 | CC3& CC4 (invalid) |
| 8 | CC3 (invalid) |

If the terminal receives the DCIs with scheduling the first carrier group numbers of 1, 2, 4, 5, 7 and 8, the scheduling is considered invalid.

For example, if at least one scheduled carrier in the first carrier group is in the deactivation or sleep mode, the first carrier group is determined to be valid and data is not sent and received on the scheduled carrier in the deactivation or sleep mode. For example, if the scheduled carrier CC3 is in a deactivated state, the above table 1 is updated to table 10.

Table 10

| First carrier group number | Cell identification number of the scheduled carrier |
|---|---|
| 1 | CC1&CC2&CC3&CC4 |
| 2 | CC1&CC2&CC3 |
| 3 | CC1&CC2&CC4 |
| 4 | CC1&CC3&CC4 |
| 5 | CC2&CC3 |

(continued)

| First carrier group number | Cell identification number of the scheduled carrier |
|---|---|
| 6 | CC2&CC4 |
| 7 | CC3& CC4 |
| 8 | CC3 |

In an implementation, if the terminal receives DCIs with scheduling the first carrier group numbers of 1, 2, 4, 5, 7 and 8, it is considered that CC3 in the first carrier groups is not scheduled, and other carriers are still scheduled carriers.

The application provides a method for determining a scheduled carrier in multi-carrier scheduling, and the key point is that the terminal determines the starting CCE position of the PDCCH candidate for monitoring multi-carrier scheduling according to the offset corresponding to the PDCCH candidate, and the terminal can determine the frequency-domain position of the PDCCH candidate for multi-carrier scheduling and monitor, so that the terminal can detect the multi-carrier scheduling DCI and then determine the scheduled carrier. When the terminal detects the multi-carrier scheduling DCI on the PDCCH candidate, it determines the scheduled carrier according to the information of the multi-carrier scheduling indication field. Further, the terminal determines the scheduled carrier according to the activated state or sleep state of the scheduled carrier.

Embodiment 2, based on the same inventive concept, the embodiment of the present application also provides a terminal, since the terminal is the terminal in the method of the embodiments of the present application, and the principle for solving the problem by the terminal is similar to that of the method, the implementation of the terminal can refer to the implementation of the method, and the repetition is not repeated here.

As shown in FIG. 10, the terminal includes at least one processor 1000 and a memory 1001 connected with the at least one processor, where the memory 1001 is configured to store a program executed by the at least one processor 1000, and the at least one processor 1000 is configured to read the program in the memory 1001 and execute the following steps:

determining an offset corresponding to a first carrier group, where the first carrier group includes at least one carrier, and the first carrier group is configured for multi-carrier scheduling;
determining a starting control channel element CCE position of a physical downlink control channel PDCCH candidate corresponding to the first carrier group according to the offset corresponding to the first carrier group.

As an optional implementation, the offset includes a first offset;
the at least one processor 1000 is specifically configured to perform:

receiving a first radio resource control RRC signaling sent by a network side device, where the first RRC signaling carries a first configuration parameter, and the first configuration parameter is related to multi-carrier scheduling;
determining the first offset corresponding to the first carrier group according to the first configuration parameter.

As an optional implementation, if the number of the first carrier groups is greater than 1, the first carrier groups and the offset satisfy that the offsets corresponding to different first carrier groups are the same, and/or, different.

As an optional implementation, the offsets corresponding to different first carrier groups are the same, and/or, different, including one or more of the following:

the offsets corresponding to different first carrier groups with a same designated cell identifier are the same, and/or the offsets corresponding to different first carrier groups with different designated cell identifiers are different, where the designated cell identifier is one cell identifier in a cell identifier set corresponding to one first carrier group, and the cell identifier set includes cell identifiers corresponding to respective scheduled carriers in the first carrier group;
each first carrier group corresponds to one unique offset;
all the first carrier groups correspond to one offset; all the first carrier groups are all first carrier groups in a same cell group.

As an optional implementation, the designated cell identifier is a minimum value of the cell identifiers in the cell identifier set; or a maximum value of the cell identifiers in the cell identifier set.

As an optional implementation, the offset includes a second offset, where at least one carrier included in the first carrier group is configured for cross-carrier scheduling;
the at least one processor 1000 is specifically configured to perform:

receiving a second RRC signaling sent by a network side device, where the second RRC signaling includes a second configuration parameter, and the second configuration parameter is related to cross-carrier scheduling;

determining the second offset corresponding to the first carrier group according to the second configuration parameter.

As an optional implementation, the second offset is a maximum value of cross-carrier scheduling indication indexes, where the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;

or, the second offset is a preset value greater than or equal to zero.

As an optional implementation, the offset includes a first offset and a second offset, where at least one carrier included in the first carrier group is configured for cross-carrier scheduling;

the at least one processor 1000 is specifically configured to perform:

determining that the first offset corresponding to the first carrier group is zero;

determining the second offset corresponding to the first carrier group according to a cross-carrier scheduling indication index value corresponding to a first carrier in the first carrier group; where the first carrier satisfies that:

it is a carrier configured for multi-carrier scheduling and cross-carrier scheduling; or

a cell identifier corresponding to the first carrier is a minimum cell identifier among cell identifiers corresponding to carriers configured for cross-carrier scheduling in the first carrier group; or

a cell identifier corresponding to the first carrier is a maximum cell identifier among cell identifiers corresponding to carriers configured for cross-carrier scheduling in the first carrier group.

As an optional implementation, the offset includes a first offset and a second offset, where none of carriers included in the first carrier group are configured for cross-carrier scheduling;

the at least one processor 1000 is specifically configured to perform:

determining the first offset corresponding to the first carrier group according to a first configuration parameter in a received first RRC signaling;

determining the second offset corresponding to the first carrier group is zero.

As an optional implementation, the at least one processor 1000 is specifically configured to perform:

determining the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; where all aggregation levels include aggregation levels in the search space corresponding to scheduled carriers of the first carrier group and/or an aggregation level in the search space corresponding to a single scheduled carrier.

As an optional implementation, the at least one processor 1000 is specifically configured to determine the starting CCE position of the PDCCH candidate corresponding to the first carrier group by the following formula:

$$S = L \times \left\{ \left( Y_{p,n_{s,f}^{\mu}} + \left\lfloor \frac{m_{s,m\_n_{CI}} \cdot N_{CCE,p}}{L \cdot M_{s,max}^{(L)}} \right\rfloor + n_{CI} + X \right) \bmod \left\lfloor N_{CCE,p}/L \right\rfloor \right\} + i$$

Where S represents the starting CCE position of the PDCCH candidate corresponding to the first carrier group; L represents the aggregation level of the PDCCH candidate in the search space corresponding to the first carrier group; $N_{CCE,p}$ represents the number of CCEs in the physical resource set associated with the search space corresponding to the first carrier group; $m_{s,m\_n_{CI}} = \left[ 0, \ M_{s,m_{n_{CI}}}^{(L)} - 1 \right]$, $M_{s,m\_n_{CI}}^{(L)}$ represents the number of the PDCCH candidates with the aggregation level of L in the search space corresponding to the first carrier group; $M_{s,max}^{(L)}$ represents the number of all the maximum PDCCH candidates with the aggregation level of L in the multi-carrier scheduling; i = [0, L - 1];

$Y_{p,n_{s,f}^{\mu}}$ represents a random number; $n_{CI}$ represents the second offset and X represents the first offset.

As an optional implementation, a length of an indication field corresponding to the multi-carrier scheduling is determined according to the number of the first carrier group.

As an optional implementation, the at least one processor 1000 is specifically configured to perform:

determining whether the first carrier group is valid according to an activation state of at least one carrier in the first carrier group.

As an optional implementation, the at least one processor 1000 is specifically configured to perform:

determining the first carrier group is invalid if at least one carrier in the first carrier group is in a deactivation or sleep mode; or
determining that the first carrier group is valid and data is not sent or received on the carrier in the deactivation or sleep mode if at least one carrier in the first carrier group is in the deactivation or sleep mode.

Embodiment 3, based on the same inventive concept, the embodiment of the present application also provides an apparatus for determining a frequency-domain position of a PDCCH candidate, since the apparatus is the apparatus in the method of the embodiment of the present application, and the principle for solving the problem by the apparatus is similar to that of the method, the implementation of the apparatus can refer to the implementation of the method, and the repetition is not repeated here.

As shown in FIG. 11, the apparatus includes:

an offset determination unit 1100, configured to determine an offset corresponding to a first carrier group, where the first carrier group includes at least one carrier, and the first carrier group is configured for multi-carrier scheduling;
a position determination unit 1101, configured to determine a starting control channel element CCE position of a physical downlink control channel PDCCH candidate corresponding to the first carrier group according to the offset corresponding to the first carrier group.

As an optional implementation, the offset includes a first offset;
the offset determination unit 1100 is specifically configured to:

receive a first radio resource control RRC signaling sent by a network side device, where the first RRC signaling carries a first configuration parameter, and the first configuration parameter is related to multi-carrier scheduling;
determine the first offset corresponding to the first carrier group according to the first configuration parameter.

As an optional implementation, if the number of the first carrier groups is greater than 1, the first carrier groups and the offset satisfy that the offsets corresponding to different first carrier groups are the same, and/or, different.

As an optional implementation, the offsets corresponding to different first carrier groups are the same, and/or, different, including one or more of the following:

the offsets corresponding to different first carrier groups with a same designated cell identifier are the same, and/or the offsets corresponding to different first carrier groups with different designated cell identifiers are different, where the designated cell identifier is one cell identifier in a cell identifier set corresponding to one first carrier group, and the cell identifier set includes cell identifiers corresponding to respective scheduled carriers in the first carrier group;
each first carrier group corresponds to one unique offset;
all the first carrier groups correspond to one offset; all the first carrier groups are all first carrier groups in a same cell group.

As an optional implementation, the designated cell identifier is a minimum value of the cell identifiers in the cell identifier set; or a maximum value of the cell identifiers in the cell identifier set.

As an optional implementation, the offset includes a second offset, where at least one carrier included in the first carrier group is configured for cross-carrier scheduling;
the offset determination unit 1100 is specifically configured to:

receive a second RRC signaling sent by a network side device, where the second RRC signaling includes a second configuration parameter, and the second configuration parameter is related to cross-carrier scheduling;
determine the second offset corresponding to the first carrier group according to the second configuration parameter.

As an alternative embodiment, the second offset is a maximum value of cross-carrier scheduling indication indexes, where the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;
or, the second offset is a preset value greater than or equal to zero.

As an optional implementation, the offset includes a first offset and a second offset, where at least one carrier included in the first carrier group is configured for cross-carrier scheduling;
the offset determination unit 1100 is specifically configured to:

determine that the first offset corresponding to the first carrier group is zero;
determine the second offset corresponding to the first carrier group according to a cross-carrier scheduling indication index value corresponding to a first carrier in the first carrier group; where the first carrier satisfies that:

it is a carrier configured for multi-carrier scheduling and cross-carrier scheduling; or
a cell identifier corresponding to the first carrier is a minimum cell identifier among cell identifiers corresponding to carriers configured for cross-carrier scheduling in the first carrier group; or
a cell identifier corresponding to the first carrier is a maximum cell identifier among cell identifiers corresponding to carriers configured for cross-carrier scheduling in the first carrier group.

As an optional implementation, the offset includes a first offset and a second offset, where none of carriers included in the first carrier group are configured for cross-carrier scheduling;
the offset determination unit 1100 is specifically configured to:

determine the first offset corresponding to the first carrier group according to a first configuration parameter in a received first RRC signaling;
determine the second offset corresponding to the first carrier group is zero.

As an optional implementation, the position determination unit 1101 is specifically configured to:
determine the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; where all aggregation levels include aggregation levels in the search space corresponding to scheduled carriers of the first carrier group and/or an aggregation level in the search space corresponding to a single scheduled carrier.

As an optional implementation, the position determination unit 1101 is specifically configured to determine the starting CCE position of the PDCCH candidate corresponding to the first carrier group by the following formula:

$$S = L \times \left\{ \left( Y_{p,n_{s,f}^{\mu}} + \left\lceil \frac{m_{s,m\_n_{CI}} \cdot N_{CCE,p}}{L \cdot M_{s,\max}^{(L)}} \right\rceil + n_{CI} + X \right) \bmod \left\lfloor N_{CCE,p}/L \right\rfloor \right\} + i$$

where S represents the starting CCE position of the PDCCH candidate corresponding to the first carrier group; L represents the aggregation level of the PDCCH candidate in the search space corresponding to the first carrier group; $N_{CCE,p}$ represents the number of CCEs in the physical resource set associated with the search space corresponding to the first carrier group; $m_{s,m\_n_{CI}} = \left[ 0, \ M_{s,m_{n_{CI}}}^{(L)} - 1 \right]$, $M_{s,m\_n_{CI}}^{(L)}$ represents the number of the PDCCH candidates with the aggregation level of L in the search space corresponding to the first carrier group; $M_{s,\max}^{(L)}$ represents the number of all the maximum PDCCH candidates with the aggregation level of L in the multi-carrier scheduling; i = [0, L - 1] ; $Y_{p,n_{s,f}^{\mu}}$ represents a random number; $n_{CI}$ represents the second offset and X represents the first offset.

As an optional implementation, a length of an indication field corresponding to the multi-carrier scheduling is determined according to the number of the first carrier group.

As an optional implementation, a judgment unit is specifically configured to:

determine whether the first carrier group is valid according to an activation state of at least one carrier in the first carrier group.

As an optional implementation, the judgment unit is specifically configured to:

determine the first carrier group is invalid if at least one carrier in the first carrier group is in a deactivation or sleep mode; or

determine that the first carrier group is valid and data is not sent or received on the carrier in the deactivation or sleep mode if at least one carrier in the first carrier group is in the deactivation or sleep mode.

Based on the same inventive concept, the embodiment of the present application also provides a computer storage medium, where the computer storage medium stores a computer program, and when executed by at least one processor, the program implements the following steps:

determine an offset corresponding to a first carrier group, where the first carrier group includes at least one carrier, and the first carrier group is configured for multi-carrier scheduling;

determine a starting control channel element CCE position of a physical downlink control channel PDCCH candidate corresponding to the first carrier group according to the offset corresponding to the first carrier group.

Other contents refer to the above embodiments, and will not be described repeatedly.

It should be understood by those skilled in the art that embodiments of the present application can be provided as a method, a system, or a computer program product. Therefore, this application can take the form of a full hardware embodiment, a full software embodiment, or an embodiment combining software and hardware aspects. Moreover, this application can take the form of a computer program product implemented on one or more computer-usable storage media (including but not limited to magnetic disk storage and optical storage) including computer-usable program codes therein.

The present application is described with reference to a flowchart and/or a block diagram of the method, device (system), and computer program product according to embodiments of the present application. It should be understood that each flow and/or block in the flowchart and/or block diagram, and a combination of the flow and/or block in the flowchart and/or block diagram can be implemented by computer program instructions. These computer program instructions may be provided to a processor of a general-purpose computer, a special-purpose computer, an embedded processor or other programmable data processing apparatus to produce a machine, such that the instructions executed by the processor of the computer or other programmable data processing apparatus produce apparatus for implementing a function specified in one or more flows of the flowchart and/or one or more blocks in the block diagram.

These computer program instructions may also be stored in a computer-readable memory that can direct a computer or other programmable data processing apparatus to operate in a particular manner, such that the instructions stored in the computer-readable memory produce a manufacturing product including an instruction apparatus that implements the function specified in one or more flows of the flowchart and/or one or more blocks of the block diagram.

These computer program instructions may also be loaded onto a computer or other programmable data processing apparatus, such that a series of operational steps are performed on the computer or other programmable apparatus to produce a computer-implemented processing, such that the instructions executed on the computer or other programmable apparatus provide steps for implementing the functions specified in the one or more flows of the flowchart and/or one or more blocks of the block diagram.

Obviously, various modifications and variations can be made to this application by those skilled in the art without departing from the spirit and scope of this application. Thus, if these modifications and variations of this application are within the scope of the claims of this application and their technical equivalents technologies, this application is also intended to include these modifications and variations.

**Claims**

1. A method for determining a frequency-domain position of a PDCCH candidate, **characterized by** comprising:

determining an offset corresponding to a first carrier group, wherein the first carrier group comprises at least one carrier, and the first carrier group is configured for multi-carrier scheduling;

determining a starting control channel element CCE position of a physical downlink control channel PDCCH candidate corresponding to the first carrier group according to the offset corresponding to the first carrier group.

2. The method according to claim 1, wherein the offset comprises a first offset;
the determining the offset corresponding to the first carrier group, comprises:

receiving a first radio resource control RRC signaling sent by a network side device, wherein the first RRC signaling carries a first configuration parameter, and the first configuration parameter is related to multi-carrier scheduling;

determining the first offset corresponding to the first carrier group according to the first configuration parameter.

3. The method according to claim 1, wherein if the number of the first carrier groups is greater than 1, the first carrier groups and the offset satisfy that the offsets corresponding to different first carrier groups are the same, and/or, different.

4. The method according to claim 3, wherein the offsets corresponding to different first carrier groups are the same, and/or, different, comprising one or more of the following:

the offsets corresponding to different first carrier groups with a same designated cell identifier are the same, and/or the offsets corresponding to different first carrier groups with different designated cell identifiers are different, wherein the designated cell identifier is one cell identifier in a cell identifier set corresponding to one first carrier group, and the cell identifier set includes cell identifiers corresponding to respective scheduled carriers in the first carrier group;

each first carrier group corresponds to one unique offset;

all the first carrier groups correspond to one offset;

all the first carrier groups are all first carrier groups in a same cell group.

5. The method according to claim 4, wherein the designated cell identifier is a minimum value of the cell identifiers in the cell identifier set; or a maximum value of the cell identifiers in the cell identifier set.

6. The method according to claim 1, wherein the offset comprises a second offset, wherein at least one carrier comprised in the first carrier group is configured for cross-carrier scheduling;

the determining the offset corresponding to the first carrier group, comprises:

receiving a second RRC signaling sent by a network side device, wherein the second RRC signaling comprises a second configuration parameter, and the second configuration parameter is related to cross-carrier scheduling;

determining the second offset corresponding to the first carrier group according to the second configuration parameter.

7. The method according to claim 6, wherein the second offset is a maximum value of cross-carrier scheduling indication indexes, wherein the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;

or, the second offset is a preset value greater than or equal to zero.

8. The method according to claim 1, wherein the offset comprises a first offset and a second offset, wherein at least one carrier comprised in the first carrier group is configured for cross-carrier scheduling;

the determining the offset corresponding to the first carrier group, comprises:

determining that the first offset corresponding to the first carrier group is zero;

determining the second offset corresponding to the first carrier group according to a cross-carrier scheduling indication index value corresponding to a first carrier in the first carrier group; wherein the first carrier satisfies that:

it is a carrier configured for multi-carrier scheduling and cross-carrier scheduling; or

a cell identifier corresponding to the first carrier is a minimum cell identifier among cell identifiers corresponding to carriers configured for cross-carrier scheduling in the first carrier group; or

a cell identifier corresponding to the first carrier is a maximum cell identifier among cell identifiers corresponding to carriers configured for cross-carrier scheduling in the first carrier group.

9. The method according to claim 1, wherein the offset comprises a first offset and a second offset, wherein none of carriers comprised in the first carrier group are configured for cross-carrier scheduling;

the determining the offset corresponding to the first carrier group comprises:

determining the first offset corresponding to the first carrier group according to a first configuration parameter in a received first RRC signaling;

determining the second offset corresponding to the first carrier group is zero.

10. The method according to any one of claims 1 to 9, wherein the determining the starting CCE position of the PDCCH candidate corresponding to the first carrier group according to the offset corresponding to the first carrier group, comprises:

determining the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; wherein all aggregation levels comprise aggregation levels in the search space corresponding to scheduled carriers of the first carrier group and/or an aggregation level in the search space corresponding to a single scheduled carrier;

wherein the offset corresponding to the first carrier group comprises a first offset and a second offset.

11. The method according to claim 10, wherein determining the starting CCE position of the PDCCH candidate corresponding to the first carrier group by the following formula:

$$S = L \times \left\{ \left( Y_{p,n_{s,f}^{\mu}} + \left\lfloor \frac{m_{s,m_{n_{CI}}} \cdot N_{CCE,p}}{L \cdot M_{s,max}^{(L)}} \right\rfloor + n_{CI} + X \right) \bmod \lfloor N_{CCE,p}/L \rfloor \right\} + i$$

wherein S represents the starting CCE position of the PDCCH candidate corresponding to the first carrier group; L represents the aggregation level of the PDCCH candidate in the search space corresponding to the first carrier group; $N_{CCE,p}$ represents the number of CCEs in the physical resource set associated with the search space corresponding to the first carrier group; $m_{s,m\_n_{CI}} = \left[ 0, \ M_{s,m_{n_{CI}}}^{(L)} - 1 \right]$, $M_{s,m\_n_{CI}}^{(L)}$ represents the number of the PDCCH candidates with the aggregation level of L in the search space corresponding to the first carrier group; $M_{s,max}^{(L)}$ represents the number of all the maximum PDCCH candidates with the aggregation level of L in the multi-carrier scheduling; $i = [0, L-1]$; $Y_{p,n_{s,f}^{\mu}}$ represents a random number; $n_{CI}$ represents the second offset and X represents the first offset.

12. The method according to claim 1, wherein a length of an indication field corresponding to the multi-carrier scheduling is determined according to the number of the first carrier group.

13. The method according to claim 1, wherein if the first carrier group corresponds to a cell group, the terminal determines a cell group of multi-carrier scheduling and the first carrier group corresponding to the cell through a cell group indication field in downlink control information DCI used for multi-carrier scheduling.

14. The method according to claim 1, further comprising:
determining whether the first carrier group is valid according to an activation state of at least one carrier in the first carrier group.

15. The method according to claim 14, wherein the determining whether the first carrier group is valid according to the activation state of at least one carrier in the first carrier group, comprises:

determining the first carrier group is invalid if at least one carrier in the first carrier group is in a deactivation or sleep mode; or

determining that the first carrier group is valid and data is not sent or received on the carrier in the deactivation or sleep mode if at least one carrier in the first carrier group is in the deactivation or sleep mode.

16. An apparatus for determining a frequency-domain position of a PDCCH candidate, **characterized by** comprising:

an offset determination unit, configured to determine an offset corresponding to a first carrier group, wherein the first carrier group comprises at least one carrier, and the first carrier group is configured for multi-carrier scheduling;

a position determination unit, configured to determine a starting control channel element CCE position of a physical downlink control channel PDCCH candidate corresponding to the first carrier group according to the offset corresponding to the first carrier group.

17. The apparatus according to claim 16, wherein the offset comprises a first offset; and the offset determination unit is specifically configured to:

receive a first radio resource control RRC signaling sent by a network side device, wherein the first RRC signaling carries a first configuration parameter, and the first configuration parameter is related to multi-carrier scheduling;

determine the first offset corresponding to the first carrier group according to the first configuration parameter.

18. The apparatus according to claim 16, wherein if the number of the first carrier groups is greater than 1, the first carrier groups and the offset satisfy that the offsets corresponding to different first carrier groups are the same, and/or, different.

19. The apparatus according to claim 18, wherein the offsets corresponding to different first carrier groups are the same, and/or, different, comprising one or more of the following:

the offsets corresponding to different first carrier groups with a same designated cell identifier are the same, and/or the offsets corresponding to different first carrier groups with different designated cell identifiers are different, wherein the designated cell identifier is one cell identifier in a cell identifier set corresponding to one first carrier group, and the cell identifier set includes cell identifiers corresponding to respective scheduled carriers in the first carrier group;

each first carrier group corresponds to one unique offset;

all the first carrier groups correspond to one offset; all the first carrier groups are all first carrier groups in a same cell group.

20. The apparatus according to claim 19, wherein the designated cell identifier is a minimum value of the cell identifiers in the cell identifier set; or a maximum value of the cell identifiers in the cell identifier set.

21. The apparatus according to claim 16, wherein the offset comprises a second offset, wherein at least one carrier comprised in the first carrier group is configured for cross-carrier scheduling;

the position determination unit is specifically configured to:

receive a second RRC signaling sent by a network side device, wherein the second RRC signaling comprises a second configuration parameter, and the second configuration parameter is related to cross-carrier scheduling;

determine the second offset corresponding to the first carrier group according to the second configuration parameter.

22. The apparatus according to claim 21, wherein the second offset is a maximum value of cross-carrier scheduling indication indexes, wherein the maximum value of the cross-carrier scheduling indication indexes is a maximum value of cross-carrier scheduling indication indexes of all carriers configured for cross-carrier scheduling in the first carrier group; or, a maximum value in cross-carrier scheduling indication indexes of carriers configured for cross-carrier scheduling corresponding to a scheduling carrier of the first carrier group;

or, the second offset is a preset value greater than or equal to zero.

23. The apparatus according to claim 16, wherein the offset comprises a first offset and a second offset, wherein at least one carrier comprised in the first carrier group is configured for cross-carrier scheduling;

the offset determination unit is specifically configured to:

determine that the first offset corresponding to the first carrier group is zero;

determine the second offset corresponding to the first carrier group according to a cross-carrier scheduling indication index value corresponding to a first carrier in the first carrier group; wherein the first carrier satisfies that:

it is a carrier configured for multi-carrier scheduling and cross-carrier scheduling; or

a cell identifier corresponding to the first carrier is a minimum cell identifier among cell identifiers corresponding to carriers configured for cross-carrier scheduling in the first carrier group; or

a cell identifier corresponding to the first carrier is a maximum cell identifier among cell identifiers corresponding to carriers configured for cross-carrier scheduling in the first carrier group.

24. The apparatus according to claim 16, wherein the offset comprises a first offset and a second offset, wherein none of carriers comprised in the first carrier group are configured for cross-carrier scheduling;

the offset determination unit is specifically configured to:

determine the first offset corresponding to the first carrier group according to a first configuration parameter in a received first RRC signaling;

determine the second offset corresponding to the first carrier group is zero.

25. The apparatus according to any one of the claims 16-24, wherein the position determination unit is specifically configured to:

determine the starting CCE position of the PDCCH candidate corresponding to the first carrier group according to an aggregation level L of the PDCCH candidate in a search space corresponding to the first carrier group, the number of CCEs in a physical resource set associated with the search space, the number of the PDCCH candidates with the aggregation level of L in the search space, the number of all the maximum PDCCH candidates with the aggregation level of L in the multi-carrier scheduling, and the offset corresponding to the first carrier group; wherein all aggregation levels comprise aggregation levels in the search space corresponding to scheduled carriers of the first carrier group and/or an aggregation level in the search space corresponding to a single scheduled carrier.

26. The apparatus according to claim 25, wherein the position determination unit is specifically configured to determine the starting CCE position of the PDCCH candidate corresponding to the first carrier group by the following formula:

$$ S = L \times \left\{ \left( Y_{p,n_{s,f}^{\mu}} + \left\lceil \frac{m_{s,m\_n_{CI}} \cdot N_{CCE,p}}{L \cdot M_{s,max}^{(L)}} \right\rceil + n_{CI} + X \right) \mod \left\lfloor N_{CCE,p}/L \right\rfloor \right\} + i $$

wherein S represents the starting CCE position of the PDCCH candidate corresponding to the first carrier group; L represents the aggregation level of the PDCCH candidate in the search space corresponding to the first carrier group; $N_{CCE,p}$ represents the number of CCEs in the physical resource set associated with the search space corresponding to the first carrier group; $m_{s,m\_n_{CI}} = \left[ 0, \ M_{s,m_{n_{CI}}}^{(L)} - 1 \right]$, $M_{s,m\_n_{CI}}^{(L)}$ represents the number of the PDCCH candidates with the aggregation level of L in the search space corresponding to the first carrier group; $M_{s,max}^{(L)}$ represents the number of all the maximum PDCCH candidates with the aggregation level of L in the multi-carrier scheduling; $i = [0, L - 1]$; $Y_{p,n_{s,f}^{\mu}}$ represents a random number; $n_{CI}$ represents the second offset and X represents the first offset.

27. The apparatus according to claim 16, wherein a length of an indication field corresponding to the multi-carrier scheduling is determined according to the number of the first carrier group.

28. The apparatus according to claim 16, wherein if the first carrier group corresponds to a cell group, the terminal determines a cell group of multi-carrier scheduling and the first carrier group corresponding to the cell through a cell group indication field in downlink control information DCI used for multi-carrier scheduling.

29. The apparatus according to claim 16, further comprising a judgment unit, which is specifically configured to:

determine whether the first carrier group is valid according to an activation state of at least one carrier in the first carrier group.

30. The apparatus according to claim 29, wherein the judgment unit is specifically configured to:

determine the first carrier group is invalid if at least one carrier in the first carrier group is in a deactivation or sleep mode; or

determine that the first carrier group is valid and data is not sent or received on the carrier in the deactivation or sleep mode if at least one carrier in the first carrier group is in the deactivation or sleep mode.

31. A terminal, **characterized in that** the terminal comprises at least one processor and a memory connected with the at least one processor, wherein the memory is configured to store a program executed by the at least one processor, and the at least one processor is configured to read the program in the memory and execute the following steps:

determining an offset corresponding to a first carrier group, wherein the first carrier group comprises at least one carrier, and the first carrier group is configured for multi-carrier scheduling;

determining a starting control channel element CCE position of a physical downlink control channel PDCCH candidate corresponding to the first carrier group according to the offset corresponding to the first carrier group.

32. The terminal according to claim 31, wherein the offset comprises a first offset;

the at least one processor is specifically configured to perform:

receiving a first radio resource control RRC signaling sent by a network side device, wherein the first RRC signaling carries a first configuration parameter, and the first configuration parameter is related to multi-carrier scheduling;

determining the first offset corresponding to the first carrier group according to the first configuration parameter.

33. The terminal according to claim 31, wherein if the number of the first carrier groups is greater than 1, the first carrier groups and the offset satisfy that the offsets corresponding to different first carrier groups are the same, and/or, different.

34. The terminal according to claim 33, wherein the offsets corresponding to different first carrier groups are the same, and/or, different, comprising one or more of the following:

the offsets corresponding to different first carrier groups with a same designated cell identifier are the same, and/or the offsets corresponding to different first carrier groups with different designated cell identifiers are different, wherein the designated cell identifier is one cell identifier in a cell identifier set corresponding to one first carrier group, and the cell identifier set comprises cell identifiers corresponding to respective scheduled carriers in the first carrier group;

each first carrier group corresponds to one unique offset;

all the first carrier groups correspond to one offset;

all the first carrier groups are all first carrier groups in a same cell group.

35. A computer storage medium, wherein the computer storage medium stores a computer program, and when executed by a processor, the program implements the steps of the method according to any one of claims 1 to 15.

FIG. 1

FIG. 2

FIG. 3

```
SearchSpace ::= ················· SEQUENCE [
····searchSpaceId ···················· SearchSpaceId=2, 
    controlResourceSetId ················ ControlResourceSetId=3 ···associated with CORESET 
    ... ····························· 
nrofCandidates ···················· SEQUENCE [
········ aggregationLevel1 ·················· ENUMERATED {n0, n1, n2, n3, n4, n5, n6, n8},
········ aggregationLevel2 ·················· ENUMERATED {n0, n1, n2, n3, n4, n5, n6, n8},
········ aggregationLevel4 ·················· ENUMERATED {n0, n1, n2, n3, n4, n5, n6, n8},
········ aggregationLevel8 ·················· ENUMERATED {n0, n1, n2, n3, n4, n5, n6, n8},
········ aggregationLevel16 ················· ENUMERATED {n0, n1, n2, n3, n4, n5, n6, n8}
    ····} ·aggregation level of PDCCH candidate is 4, the number of PDCCH candidates is 4 ·······
    ...} 
```

FIG. 4A

```
ControlResourceSet ::= ············· SEQUENCE [
····controlResourceSetId ··············· ControlResourceSetId=3,

····frequencyDomainResources ········· BIT STRING (SIZE (45)),=36---the number of CCE
····duration ························ INTEGER (1..maxCoReSetDuration),
····cce-REG-MappingType ··············· CHOICE [
········ interleaved ···················· SEQUENCE [
··········· reg-BundleSize ················· ENUMERATED {n2, n3, n6},
··········· interleaverSize ················ ENUMERATED {n2, n3, n6},
··········· shiftIndex ··················
INTEGER(0..maxNrofPhysicalResourceBlocks-1) ······· OPTIONAL --- Need S
········}, 
········ nonInterleaved ················· NULL
····}, 
```

FIG. 4B

38

```
SearchSpace ::=                     SEQUENCE {
    searchSpaceId                   SearchSpaceId=2,
        controlResourceSetId        ControlResourceSetId=3 ---associated with CORESET 3
        ...
nrofCandidates                      SEQUENCE {
        aggregationLevel1           ENUMERATED {n0, n1, n2, n3, n4, n5, n6, n8},
        aggregationLevel2           ENUMERATED {n0, n1, n2, n3, n4, n5, n6, n8},
        aggregationLevel4           ENUMERATED {n0, n1, n2, n3, n4, n5, n6, n8},
        aggregationLevel8           ENUMERATED {n0, n1, n2, n3, n4, n5, n6, n8},
        aggregationLevel16          ENUMERATED {n0, n1, n2, n3, n4, n5, n6, n8}
    } --aggregation level of PDCCH candidate is 4, the number of PDCCH candidates is 8
    ...}
```

## FIG. 5A

```
ControlResourceSet ::=              SEQUENCE {
    controlResourceSetId            ControlResourceSetId=3,

    frequencyDomainResources        BIT STRING (SIZE (45)),=36---the number of CCE
    duration                        INTEGER (1..maxCoReSetDuration),
    cce-REG-MappingType             CHOICE {
        interleaved                 SEQUENCE {
            reg-BundleSize          ENUMERATED {n2, n3, n6},
            interleaverSize         ENUMERATED {n2, n3, n6},
            shiftIndex
INTEGER(0..maxNrofPhysicalResourceBlocks-1)       OPTIONAL -- Need S
        },
        nonInterleaved              NULL
    },
```

## FIG. 5B

600

Determining an offset corresponding to a first carrier group, where the first carrier group includes at least one carrier, and the first carrier group is configured for multi-carrier scheduling

601

Determining a starting control channel element CCE position of a physical downlink control channel PDCCH candidate corresponding to the first carrier group according to the offset corresponding to the first carrier group

FIG. 6

```
SearchSpace ::=                          SEQUENCE {
    searchSpaceId                        SearchSpaceId=1,
        controlResourceSetId             ControlResourceSetId=3  --associated with CORESET 3
            ...
nrofCandidates                           SEQUENCE {
        aggregationLevel4                ENUMERATED { n8 },
        } --aggregation level of PDCCH candidate is 4, the number of PDCCH candidates is 8
    }
```

FIG. 7

```
SearchSpace ::=                          SEQUENCE {
    searchSpaceId                        SearchSpaceId=1,
        controlResourceSetId             ControlResourceSetId=3  --associated with CORESET 3
            ...
nrofCandidates                           SEQUENCE {
        aggregationLevel8                ENUMERATED { n4 },
        } --aggregation level of PDCCH candidate is 8, the number of PDCCH candidates is 4
    }
```

FIG. 8

```
earchSpace ::= ............................ SEQUENCE {
   searchSpaceId ........................... SearchSpaceId=2,
      controlResourceSetId ................... ControlResourceSetId=3 ---associated with CORESET 3
      monitoringSlotPeriodicityAndOffset CHOICE { ..... sl10 INTERGER (10) ..... } ..
      duration .... INTERGER (2) ....
      monitoringSymbolsWithinSlot ... BIT STRING(10000000000000) ...........
rofCandidates ........................ SEQUENCE {
........ aggregationLevel1 ..................... ENUMERATED {n0, n1, n2, n3, n4, n5, n6, n8},
........ aggregationLevel2 ..................... ENUMERATED {n0, n1, n2, n3, n4, n5, n6, n8},
........ aggregationLevel4 ..................... ENUMERATED {n0, n1, n2, n3, n4, n5, n6, n8},
........ aggregationLevel8 ..................... ENUMERATED {n0, n1, n2, n3, n4, n5, n6, n8},
........ aggregationLevel16 .................... ENUMERATED {n0, n1, n2, n3, n4, n5, n6, n8}
   ....} --aggregation level of PDCCH candidate is 4, the number of PDCCH candidates is 4 .......
   ...}
```

FIG. 9

1000                                              1001

| Processor | | Memory |

FIG. 10

1100

| Offset determination unit |

1101

| Position determination unit |

FIG. 11

## INTERNATIONAL SEARCH REPORT

| International application No. |
|---|
| **PCT/CN2023/110303** |

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNKI, CNTXT, ENTXT, ENTXTC, 3GPP: 载波组, 载波, 组, 集, 多, 跨, 调度, 物理下行控制信道, 物理下行链路控制信道, 候选, 控制信道元素, 起始, 位置, 偏移, carrier?, CC, group?, set, sets, multi+, cross, schedul+, PDCCH, candidate, CCE, start, position, location, index, offset, shift

### C. DOCUMENTS CONSIDERED TO BE RELEVANT

| Category* | Citation of document, with indication, where appropriate, of the relevant passages | Relevant to claim No. |
|---|---|---|
| PX | CN 115299095 A (BEIJING XIAOMI MOBILE SOFTWARE CO., LTD.) 04 November 2022 (2022-11-04) <br> description, paragraphs 0044-0244 | 1-35 |
| X | CN 107432018 A (NTT DOCOMO INC.) 01 December 2017 (2017-12-01) <br> description, paragraphs 0030-0118, and figures 1A-10 | 1-35 |
| A | CN 102201885 A (CHINA ACADEMY OF TELECOMMUNICATIONS TECHNOLOGY) 28 September 2011 (2011-09-28) <br> entire document | 1-35 |
| A | WO 2021062825 A1 (GUANGDONG OPPO MOBILE TELECOMMUNICATIONS CORP., LTD. et al.) 08 April 2021 (2021-04-08) <br> entire document | 1-35 |
| A | SAMSUNG. "Corrections on Search Space Design" <br> *3GPP TSG RAN WG1 Meeting #92bis R1-1804370,* 20 April 2018 (2018-04-20), <br> entire document | 1-35 |

☐ Further documents are listed in the continuation of Box C.  ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **10 November 2023** | **15 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/110303** |

| Patent document cited in search report | | | Publication date (day/month/year) | Patent family member(s) | | | Publication date (day/month/year) |
| --- | --- | --- | --- | --- | --- | --- | --- |
| CN | 115299095 | A | 04 November 2022 | None | | | |
| CN | 107432018 | A | 01 December 2017 | US | 2018115965 | A1 | 26 April 2018 |
| | | | | WO | 2016163503 | A1 | 13 October 2016 |
| | | | | JPWO | 2016163503 | A1 | 08 February 2018 |
| CN | 102201885 | A | 28 September 2011 | None | | | |
| WO | 2021062825 | A1 | 08 April 2021 | CN | 113812191 | A | 17 December 2021 |

Form PCT/ISA/210 (patent family annex) (July 2022)

**REFERENCES CITED IN THE DESCRIPTION**

**Patent documents cited in the description**

- CN 202210929395
- CN 202310153183X